(19) Europäisches Patentamt / European Patent Office / Office européen des brevets

(11) **EP 3 464 437 B1**

(12) **EUROPÄISCHE PATENTSCHRIFT**

(45) Veröffentlichungstag und Bekanntmachung des Hinweises auf die Patenterteilung:
**07.07.2021   Patentblatt 2021/27**

(21) Anmeldenummer: **17723145.3**

(22) Anmeldetag: **17.05.2017**

(51) Int Cl.:
*C08J 9/36* *(2006.01)*      *B29C 44/56* *(2006.01)*
*B29C 44/42* *(2006.01)*      *C08L 75/00* *(2006.01)*
*B32B 5/18* *(2006.01)*      *B32B 5/24* *(2006.01)*
*B32B 7/08* *(2019.01)*

(86) Internationale Anmeldenummer:
**PCT/EP2017/061869**

(87) Internationale Veröffentlichungsnummer:
**WO 2017/202668 (30.11.2017 Gazette 2017/48)**

(54) **FASERVERSTÄRKUNG VON REAKTIVSCHAUMSTOFFEN AUS EINEM FORMSCHÄUMVERFAHREN**

FIBRE REINFORCEMENT OF REACTIVE FOAMS OBTAINED BY A FOAM MOULDING METHOD

RENFORCEMENT PAR FIBRES DE MOUSSES RÉACTIVES OBTENUES PAR UN PROCÉDÉ DE MOUSSAGE EN MOULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2016   EP 16171420**

(43) Veröffentlichungstag der Anmeldung:
**10.04.2019   Patentblatt 2019/15**

(73) Patentinhaber: **BASF SE**
**67056 Ludwigshafen (DE)**

(72) Erfinder:
• **RUCKDAESCHEL, Holger**
  **67056 Ludwigshafen (DE)**
• **TERRENOIRE, Alexandre**
  **68623 Lampertheim (DE)**
• **ARBTER, Rene**
  **67056 Ludwigshafen (DE)**
• **SAMPATH, Bangaru Dharmapuri Sriramulu**
  **67056 Ludwigshafen (DE)**
• **GUTMANN, Peter**
  **67056 Ludwigshafen (DE)**
• **STOLL, Ragnar**
  **49448 Lemfoerde (DE)**
• **HEBETTE, Christophe**
  **210048 Nanjing (CN)**
• **STEIN, Robert**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**WO-A1-2006/125561**

**Beschreibung**

Die vorliegende Erfindung betrifft einen Formkörper aus Reaktivschaumstoff, wobei sich mindestens eine Faser (F) teilweise innerhalb des Formkörpers befindet, also vom Reaktivschaumstoff umschlossen ist. Die beiden nicht vom Reaktivschaumstoff umschlossenen Enden der jeweiligen Faser (F) ragen somit aus jeweils einer Seite des entsprechenden Formkörpers heraus. Der Reaktivschaumstoff wird durch ein Formschäumverfahren hergestellt. Ein weiterer Gegenstand der vorliegenden Erfindung ist ein Paneel, das mindestens einen solchen Formkörper sowie mindestens eine weitere Schicht (S1) umfasst. Weitere Gegenstände der vorliegenden Erfindung sind Verfahren zur Herstellung der erfindungsgemäßen Formkörper aus Reaktivschaumstoff bzw. der erfindungsgemäßen Paneele sowie deren Verwendung, beispielsweise als Rotorblatt in Windenergieanlagen.

WO 2006/125561 betrifft ein Verfahren zur Herstellung von einem verstärkten zellulären Material, wobei in einem ersten Verfahrensschritt im zellulären Material mindestens ein Loch erzeugt wird, das sich von einer ersten Oberfläche zu einer zweiten Oberfläche des zellulären Materials erstreckt. Auf der anderen Seite, der zweiten Oberfläche des zellulären Materials, wird mindestens ein Faserbündel bereitgestellt, wobei dieses Faserbündel mit einer Nadel durch das Loch auf die erste Seite des zellulären Materials gezogen wird. Bevor die Nadel das Faserbündel fasst, wird die Nadel jedoch zunächst von der ersten Seite des zellulären Materials kommend durch das jeweilige Loch gezogen. Weiterhin befindet sich das Faserbündel mit Abschluss des Verfahrens gemäß WO 2006/125561 teilweise innerhalb des zellulären Materials, da es das entsprechende Loch ausfüllt, teilweise ragt das entsprechende Faserbündel auf den jeweiligen Seiten aus der ersten sowie zweiten Oberfläche des zellulären Materials heraus.

Durch das in WO 2006/125561 beschriebene Verfahren können sandwichartige Komponenten hergestellt werden, die einen Kern aus besagtem zellulären Material sowie mindestens ein Faserbündel umfassen. An den Oberflächen dieses Kernes können Harzschichten und faserverstärkte Harzschichten aufgebracht werden, um die eigentliche sandwichartige Komponente herzustellen. Als zelluläres Material zur Ausbildung des Kerns der sandwichartigen Komponente können beispielsweise Polyvinylchloride oder Polyurethane eingesetzt werden. Als Faserbündel kommen beispielsweise Kohlenstofffasern, Nylonfasern, Glasfasern oder Polyesterfasern in Frage.

WO 2006/125561 offenbart jedoch nicht, dass Reaktivschaumstoffe, die durch ein Formschäumverfahren hergestellt werden, als zelluläres Material zur Herstellung eines Kerns in einer sandwichartigen Komponente verwendet werden können. Die sandwichartigen Komponenten gemäß WO 2006/125561 eignen sich zur Verwendung im Flugzeugbau.

WO 2011/012587 betrifft ein weiteres Verfahren zur Herstellung eines Kerns mit integrierten Brückenfasern für Paneele aus Kompositmaterialien. Der Kern wird hergestellt, indem durch einen so genannten "Kuchen" aus Leichtmaterial die auf einer Oberfläche des entsprechenden Kuchens bereitgestellten Brückenfasern mit Hilfe einer Nadel teilweise oder vollständig durchgezogen werden. Der "Kuchen" kann aus Polyurethanschäumen, Polyesterschäumen, Polyethylenterephthalatschäumen, Polyvinylchloridschäumen oder einem phenolischen Schaum, insbesondere aus einem Polyurethanschaum ausgebildet sein. Als Fasern können prinzipiell jegliche Art von einfachen oder mehrfachen Fäden sowie sonstige Garne verwendet werden.

Die so hergestellten Kerne können wiederum Bestandteil eines Paneels aus Kompositmaterialien sein, wobei der Kern einseitig oder zweiseitig von einer Harzmatrix und Kombinationen aus Harzmatrizes mit Fasern in einer sandwichartigen Ausgestaltung umgeben ist. WO 2011/012587 offenbart jedoch nicht, dass Reaktivschaumstoffe, die durch ein Formschäumverfahren hergestellt werden, zur Herstellung des entsprechenden Kernmaterials eingesetzt werden können.

WO 2012/138445 betrifft ein Verfahren zur Herstellung eines Komposit-Kernpaneels unter Verwendung einer Vielzahl von länglichen Streifen aus einem zellulären Material mit einer niedrigen Dichte. Zwischen die jeweiligen Streifen wird eine doppellagige Fasermatte eingebracht, die unter Verwendung von Harz ein Verkleben der einzelnen Streifen unter Ausbildung der Komposit-Kernpaneele bewirkt. Das zelluläre Material mit niedriger Dichte, das die länglichen Streifen ausbildet, ist gemäß WO 2012/138445 ausgewählt aus Balsaholz, elastischen Schäumen oder faserverstärkten Kompositschäumen. Bei den doppellagig zwischen den einzelnen Streifen eingebrachten Fasermatten kann es sich beispielsweise um eine poröse Glasfasermatte handeln. Das als Kleber verwendete Harz kann beispielsweise ein Polyester, ein Epoxy- oder ein phenolisches Harz sein oder ein durch Wärme aktivierter Thermoplast, beispielsweise Polypropylen oder PET. WO 2012/138445 offenbart jedoch nicht, dass als zelluläres Material für die verlängerten Streifen auch ein Reaktivschaumstoff, der durch ein Formschäumverfahren hergestellt wird, verwendet werden kann. Ebenso wenig ist darin offenbart, dass einzelne Fasern oder Faserbündel in das zelluläre Material zur Verstärkung eingebracht werden können. Gemäß WO 2012/138445 werden hierfür ausschließlich Fasermatten eingesetzt, die zudem ein Verbindungsglied im Rahmen einer Verklebung der einzelnen Streifen mittels Harz unter Erhalt des Kernmaterials darstellen.

GB-A 2 455 044 offenbart ein Verfahren zur Herstellung eines mehrschichtigen Kompositartikels, wobei in einem ersten Verfahrensschritt eine Vielzahl von Pellets aus thermoplastischem Material sowie einem Treibmittel bereitgestellt werden. Das thermoplastische Material ist ein Gemisch aus Polystyrol (PS) und Polyphenylenoxid (PPO), das mindestens 20 bis 70 Gew.-% PPO enthält. In einem zweiten Verfahrensschritt werden die Pellets expandiert und in einem dritten Schritt in einer Form unter Ausbildung eines geschlossenzelligen Schaums aus dem thermoplastischen Material zu einem Formkörper verschweißt, wobei der geschlossenzellige Schaum die Gestalt der Form annimmt. Im nächsten Verfahrensschritt wird auf die Oberfläche des geschlossenzelligen Schaums eine Schicht aus faserverstärktem Material aufgebracht, wobei die Anbindung der jeweiligen Oberflächen unter Verwendung von einem Epoxidharz durchgeführt wird. GB-A 2 455 044 offenbart jedoch nicht, dass ein Fasermaterial in den Kern des mehrschichtigen Kompositartikels eingebracht werden kann.

Ein sinngemäßes Verfahren bzw. ein sinngemäßer mehrschichtiger Kompositartikel (wie in GB-A 2 455 044) ist auch in WO 2009/047483 offenbart. Diese mehrschichtigen Kompositartikel eignen sich beispielsweise zur Verwendung als Rotorblätter (in Windturbinen) oder als Bootrumpf.

US-B 7,201,625 offenbart ein Verfahren zur Herstellung von Schaumprodukten sowie die Schaumprodukte als solche, die beispielsweise im Sportbereich als Surfbrett eingesetzt werden können. Den Kern des Schaumproduktes bildet ein Partikelschaum, beispielsweise auf Basis eines Polystyrolschaums. Dieser Partikelschaum wird in einer speziellen Form hergestellt, wobei eine Plastikaußenhaut den Partikelschaum umschließt. Die Plastikaußenhaut kann beispielsweise ein Polyethylenfilm sein. Auch US-B 7,201,625 offenbart jedoch nicht, dass im Partikelschaum Fasern zur Verstärkung des Materials enthalten sein können.

US-B 6,767,623 offenbart Sandwichpaneele, die eine Kernschicht aus Polypropylenpartikelschaum auf der Basis von Partikeln mit einer Partikelgröße im Bereich von 2 bis 8 mm und einer Schüttdichte im Bereich von 10 bis 100 g/l aufweisen. Weiterhin umfassen die Sandwichpaneele zwei Deckschichten aus faserverstärktem Polypropylen, wobei die einzelnen Deckschichten so um den Kern angeordnet sind, dass ein Sandwich ausgebildet wird. Gegebenenfalls können noch weitere Schichten zu dekorativen Zwecken in den Sandwichpaneelen enthalten sein. Die Deckschichten können Glasfasern oder sonstige Polymerfasern enthalten.

EP-A 2 420 531 offenbart Extrusionsschaumstoffe auf Basis eines Polymers wie Polystyrol, in denen mindestens ein mineralischer Füllstoff mit einer Partikelgröße von $\leq 10~\mu m$ und mindestens ein Keimbildner enthalten sind. Diese Extrusionsschaumstoffe zeichnen sich durch ihre verbesserte Steifigkeit aus. Weiterhin wird ein entsprechendes Extrusionsverfahren zur Herstellung solcher Extrusionsschaumstoffe auf Basis von Polystyrol beschrieben. Die Extrusionsschaumstoffe können geschlossenzellig sein. Die EP-A 2 480 531 beschreibt allerdings nicht, dass die Extrusionsschaumstoffe Fasern enthalten.

WO 2005/056653 betrifft Partikelschaumstoffformteile aus expandierbaren, Füllstoff enthaltenden Polymergranulaten. Die Partikelschaumstoffformteile sind erhältlich durch Verschweißen von vorgeschäumten Schaumpartikeln aus expandierbaren, Füllstoff enthaltenden, thermoplastischen Polymergranulaten, wobei der Partikelschaumstoff eine Dichte im Bereich von 8 bis 300 g/l aufweist. Bei den thermoplastischen Polymergranulaten handelt es sich insbesondere um ein Styrolpolymer. Als Füllstoff können pulverförmige anorganische Stoffe, Metall, Kreide, Aluminiumhydroxid, Kalziumcarbonat oder Tonerde oder kugel- oder faserförmige anorganische Stoffe wie Glaskugeln, Glasfasern oder Kohlefasern eingesetzt werden.

Die US 3,030,256 beschreibt laminierte Paneele sowie ein Verfahren zu deren Herstellung. Die Paneele umfassen ein Kernmaterial, in das Faserbündel eingebracht werden, sowie Oberflächenmaterialien. Die Kernmaterialien sind geschäumter Plastik und expandierter Plastik. Die Fasern befinden sich mit einem Faserbereich innerhalb des Schaumstoffs. Ein erster Faserbereich ragt aus der ersten Seite des Formkörpers heraus, ein zweiter Faserbereich aus der zweiten Seite des Formkörpers.

Die US 6,187,411 betrifft verstärkte Sandwich-Paneele, die ein Schaumstoffkernmaterial, das auf beiden Seiten eine Faserschicht aufweist, und Fasern, die durch die äußeren Faserschichten und den Schaumstoff hindurch gestochen werden, umfasst. Als Schaumstoffkernmaterialien sind Polyurethane, Phenole und Isocyanate beschrieben.

Die US 2010/0196652 betrifft quasi isotrope Sandwich-Strukturen, die ein Kernmaterial umfassen, das von Fasermatten umgeben ist, wobei Glasfaserrovings in die Fasermatten und das Kernmaterial gestochen sind. Als Schaumstoffe sind verschiedene Schaumstoffe, wie beispielsweise Polyurethan, Polyisocyanurat, Phenole, Polystyrol, PEI, Polyethylen, Polypropylen und ähnliche beschrieben.

Nachteilig bei den in US 3,030,256, US 6,187,411 und US 2010/0196652 beschriebenen Kompositmaterialien ist, dass diese häufig eine hohe Harzaufnahme aufweisen.

Für die Herstellung von Reaktivschäumen gibt es eine Vielzahl unterschiedlicher Herstellverfahren, Materialien und daraus resultierende Eigenschaften. Eine Übersicht ist beispielsweise in Polyurethane and related foams', K. Ashida, 2006, CRC, in Polyurethane Handbook, G. Oertel, 1994, 2nd edition, Hanser und in Szycher's Handbook of Polyurethanes, M. Szycher, 2012, 2nd edition, CRC, gegeben.

Die der vorliegenden Erfindung zugrunde liegende Aufgabe besteht in der Bereitstellung von neuen faserverstärkten Formkörpern bzw. Paneelen.

Gelöst wird diese Aufgabe erfindungsgemäß durch einen Formkörper aus Reaktivschaumstoff, bei dem mindestens eine Faser (F) sich mit einem Faserbereich (FB2) innerhalb des Formkörpers befindet und von dem Reaktivschaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei der Reaktivschaumstoff nach einem Formschäumverfahren hergestellt ist, wobei die Faser (F) in einem Winkel α von 10 bis 70° relativ zur Dickenrichtung (d) des Formkörpers in den Reaktivschaumstoff eingebracht ist und wobei der Formkörper erhältlich ist nach einem Verfahren umfassend die Schritte a) bis f):

a) gegebenenfalls Aufbringen von mindestens einer Schicht (S2) auf mindestens eine Seite des Reaktivschaumstoffs,

b) Erzeugung von einem Loch je Faser (F) im Reaktivschaumstoff und gegebenenfalls der Schicht (S2), wobei sich das Loch von einer ersten Seite zu einer zweiten Seite des Reaktivschaumstoffs und gegebenenfalls durch die Schicht (S2) erstreckt,

c) Bereitstellung von mindestens einer Faser (F) auf der zweiten Seite des Reaktivschaumstoffs,

d) Durchführen einer Nadel von der ersten Seite des Reaktivschaumstoffs durch das Loch zur zweiten Seite des Reaktivschaumstoffs und gegebenenfalls Durchführen der Nadel durch die Schicht (S2),

e) Befestigen von mindestens einer Faser (F) an der Nadel auf der zweiten Seite des Reaktivschaumstoffs, und

f) Rückführen der Nadel samt Faser (F) durch das Loch, so dass die Faser (F) sich mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers oder gegebenenfalls aus der Schicht (S2) herausragt und der Faserbereich (FB3) der Faser (F) aus einer zweiten Seite des Formkörpers herausragt,
wobei die Gesamtoberfläche des Formkörpers zu mehr als 30 % geschlossen ist, bestimmt wie nachfolgend angegeben,
wobei der Reaktivschaumstoff auf Basis eines Polyurethans, eines Polyharnstoffs oder eines Polyisocyanurats ist, wobei die Dichte vom Kern des Reaktivschaumstoffs zu dessen Oberfläche hin zunimmt.

Anders ausgedrückt ist der Reaktivschaumstoff nach einem Formschäumverfahren erhältlich.

Die erfindungsgemäßen Formkörper zeichnen sich in vorteilhafter Weise durch eine geringe Harzaufnahme bei gleichzeitig guter Grenzflächenanbindung aus, wobei die geringe Harzaufnahme insbesondere auf den Reaktivschaumstoff, hergestellt nach einem Formschäumverfahren, zurückzuführen ist. Dieser Effekt ist insbesondere dann von Bedeutung, wenn die erfindungsgemäßen Formkörper zu den erfindungsgemäßen Paneelen weiterverarbeitet werden.

Eine weitere Verbesserung der Anbindung bei gleichzeitig reduzierter Harzaufnahme wird erfindungsgemäß durch die Faserverstärkung der Reaktivschaumstoffe in den erfindungsgemäßen Formkörpern bzw. den daraus resultierenden Paneelen ermöglicht. Erfindungsgemäß können die Fasern (einzeln oder vorzugsweise als Faserbündel) in vorteilhafter Weise zunächst trocken in den Reaktivschaumstoff eingebracht werden. Die Fasern bzw. Faserbündel werden an den jeweiligen Reaktivschaumstoffoberflächen nicht bündig, sondern mit Überstand abgelegt und ermöglichen damit eine verbesserte Anbindung bzw. eine direkte Verbindung mit den entsprechenden Decklagen im erfindungsgemäßen Paneel. Dies ist insbesondere dann der Fall, wenn als Decklage erfindungsgemäß mindestens eine weitere Schicht (S1) unter Ausbildung eines Paneels auf die erfindungsgemäßen Formkörper aufgebracht wird. Vorzugsweise werden zwei Schichten (S1), die gleich oder verschieden sein können, aufgebracht. Besonders bevorzugt werden zwei gleiche Schichten (S1), insbesondere zwei gleiche faserverstärkte Harzschichten, auf einander gegenüberliegenden Seiten des erfindungsgemäßen Formkörpers unter Ausbildung eines erfindungsgemäßen Paneels aufgebracht. Solche Paneele werden auch als "Sandwichmaterialien" bezeichnet, wobei der erfindungsgemäße Formkörper auch als "Kernmaterial" bezeichnet werden kann.

Die erfindungsgemäßen Paneele zeichnen sich somit durch eine geringe Harzaufnahme in Verbindung mit einer guten Schälfestigkeit sowie einer guten Schubsteifigkeit und einem hohen Schubmodul aus. Weiterhin sind hohe Festigkeits- und Steifigkeitseigenschaften gezielt durch die Wahl der Fasertypen, deren Anteil und Anordnung einstellbar. Der Effekt einer geringen Harzaufnahme ist deswegen von Bedeutung, weil beim Einsatz von solchen Paneelen (Sandwichmaterialien) häufig das Ziel besteht, dass die strukturellen Eigenschaften bei möglichst geringem Gewicht erhöht werden sollen. Beim Einsatz von beispielsweise faserverstärkten Decklagen trägt neben den eigentlichen Decklagen und dem Formkörper (Sandwichkern) die Harzaufnahme des Formkörpers (Kernmaterials) zum Gesamtgewicht bei. Durch die erfindungsgemäßen Formkörper bzw. die erfindungsgemäßen Paneele kann die Harzaufnahme jedoch verringert werden, wodurch Gewicht sowie Kosten eingespart werden können.

Als besonderer Vorteil kann die geschlossene Oberfläche des Reaktivschaumstoffs angesehen werden. Nach der Herstellung des Reaktivschaumstoffs durch ein Formschäumverfahren liegt in der Regel eine versiegelte (geschlossene) Oberfläche mit hoher Oberflächengüte vor, die sich durch minimale Harzaufnahme und einen Dichtegradienten, ausgehend vom Kern des Reaktivschaumstoffs hin zur Oberfläche, auszeichnet, wobei die Dichte vom Kern des Reaktivschaumstoffs zu dessen Oberfläche zunimmt. Ein Reaktivschaumstoff mit einem Dichtegradienten, wobei die Dichte vom Kern des Reaktivschaumstoffs zu dessen Oberfläche hin zunimmt, wird auch als Integralschaumstoff bezeichnet. Insbesondere durch Kombination mit den eingebrachten Fasern zum Erhalt der erfindungsgemäßen Formkörper kann somit minimales Gewicht bei maximalen mechanischen Eigenschaften erzielt werden.

Unter dem Begriff "geschlossene Oberfläche" wird im Rahmen der vorliegenden Erfindung folgendes verstanden: Die geschlossene Oberfläche wird durch Licht- oder elektronenmikroskopische Aufnahmen ausgewertet. Anhand von Bildanalysen wird der Flächenanteil der geöffneten Schaumzellen, bezogen auf die Gesamtoberfläche, bewertet. Reaktivschäume mit geschlossener Oberfläche sind definiert als: (1-Flächenanteil der geöffneten Schaumzellen)/Gesamtoberfläche > 30 %, vorzugsweise > 50 %, mehr bevorzugt > 80 %, insbesondere > 95 %.

Ein weiterer Vorteil der erfindungsgemäßen Formkörper bzw. Paneele ist darin zu sehen, dass aufgrund der Verwendung von Reaktivschaumstoffen bzw. der damit verbundenen Herstellung das Anbringen von integrierten Strukturen wie Schlitzen oder Löchern auf den Oberflächen der Formkörper sowie die Weiterverarbeitung der Formkörper relativ einfach ist. Durch die Fertigung lassen sich Strukturen direkt im Prozess durch formgebende Schritte wie Thermoformen oder spanende Bearbeitung integrieren. Derartige Strukturen werden beim Einsatz von solchen Formkörpern (Kernmaterialien) beispielsweise häufig zum Drapieren in gekrümmte Strukturen (tiefe Schlitze), zur Verbesserung der Verarbeitbarkeit durch Flüssigharzprozesse wie der Vakuuminfusion (Löcher) und zur Beschleunigung der genannten Verarbeitungsprozess (flache Schlitze) eingebracht. Die eingebrachten Strukturen weisen vorzugsweise ebenfalls eine geschlossene Oberfläche und damit eine sehr geringe oder sogar gar keine Harzaufnahme auf.

Weiterhin können bei oder nach der Fertigung weitere Schichten (S2) auf den Reaktivschaumstoff aufgebracht werden. Derartige Schichten (S2) verbessern den Gesamtzusammenhalt des Reaktivschaumstoffs bzw. des erfindungsgemäßen Formkörpers.

Weitere Verbesserungen/Vorteile können dadurch erzielt werden, dass die Fasern (F) in einem Winkel $\alpha$ im Bereich von 10° bis 70° in Bezug zur Dickenrichtung (d) des Reaktivschaumstoffs in den Reaktivschaumstoff eingebracht werden, bevorzugt von 30° bis 50°. Generell ist das Einbringen der Fasern (F) in einem Winkel $\alpha$ von 0° bis < 90° technisch automatisiert durchführbar.

Zusätzliche Verbesserungen/Vorteile können erzielt werden, wenn die Fasern (F) nicht nur parallel zueinander in den Reaktivschaumstoff eingebracht werden, sondern weitere Fasern (F) in einem Winkel $\beta$ zueinander, der vorzugsweise im Bereich von > 0 bis 180° liegt. Dadurch wird zusätzlich eine gezielte Verbesserung der mechanischen Eigenschaften des erfindungsgemäßen Formkörpers in unterschiedlichen Richtungen erreicht.

Ebenso ist es von Vorteil, wenn in den erfindungsgemäßen Paneelen die Harz(deck)schicht durch Flüssiginjektionsverfahren oder Flüssiginfusionsverfahren aufgebracht wird, bei dem die Fasern während der Verarbeitung mit Harz getränkt und die mechanischen Eigenschaften verbessert werden können. Zudem können dadurch Kosten eingespart werden.

Nachfolgend wird die vorliegende Erfindung weiter präzisiert.

Erfindungsgemäß umfasst der Formkörper einen Reaktivschaumstoff und mindestens eine Faser (F).

Die im Formkörper enthaltene Faser (F) ist eine einzelne Faser oder ein Faserbündel, vorzugsweise ein Faserbündel. Als Faser (F) eignen sich alle dem Fachmann bekannten Materialien, die Fasern bilden können. Beispielsweise ist die Faser (F) eine organische, anorganische, metallische, keramische Faser oder eine Kombination daraus, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser, eine polymere Faser ist vorzugsweise eine Faser aus Polyester, Polyamid, Polyaramid, Polyethylen, Polyurethan, Polyvinylchlorid, Polyimid und/oder Polyamidimid, eine Naturfaser ist vorzugsweise eine Faser aus Sisal, Hanf, Flachs, Bambus, Kokos und/oder Jute.

In einer Ausführungsform werden Faserbündel eingesetzt. Die Faserbündel setzen sich aus mehreren einzelnen Fasern (Filamenten) zusammen. Die Anzahl der Einzelfasern pro Bündel beträgt mindestens 10, bevorzugt 100 bis 100 000, besonders bevorzugt 300 bis 10 000 bei Glasfasern und 1000 bis 50 000 bei Kohlenstofffasern, und insbesondere bevorzugt 500 bis 5 000 bei Glasfasern und 2000 bis 20 000 bei Kohlenstofffasern.

Erfindungsgemäß befindet sich die mindestens eine Faser (F) mit einem Faserbereich (FB2) innerhalb des Formkörpers und ist von dem Reaktivschaumstoff umschlossen, während ein Faserbereich (FB1) der Faser (F) aus einer ersten Seite des Formkörpers herausragt und ein Faserbereich (FB3) der Faser (F) aus einer zweiten Seite des Formkörpers herausragt.

Der Faserbereich (FB1), der Faserbereich (FB2) und der Faserbereich (FB3) können jeweils einen beliebigen Anteil der Gesamtlänge der Faser (F) ausmachen. In einer Ausführungsform machen der Faserbereich (FB1) und der Faserbereich (FB3) jeweils unabhängig voneinander 1 bis 45 %, vorzugsweise 2 bis 40 % und besonders bevorzugt 5 bis 30 %, und der Faserbereich (FB2) 10 bis 98 %, vorzugsweise 20 bis 96 %, besonders bevorzugt 40 bis 90 % der Gesamtlänge der Faser (F) aus.

In einer weiteren bevorzugten Ausführungsform liegt die erste Seite des Formkörpers, aus der der Faserbereich (FB1) der Faser (F) herausragt, der zweiten Seite des Formkörpers gegenüber, aus der der Faserbereich (FB3) der Faser (F) herausragt.

Die Faser (F) ist in einem Winkel $\alpha$ von 10 bis 70° relativ zu Dickenrichtung (d) des Formkörpers bzw. zur Orthogonalen (der Oberfläche) der ersten Seite (2) des Formkörpers in den Formkörper eingebracht.

Bevorzugt ist die Faser (F) in einem Winkel $\alpha$ von 30 bis 60°, vorzugsweise von 30 bis 50°, noch mehr bevorzugt von 30 bis 45°, insbesondere von 45° relativ zur Dickenrichtung (d) des Formkörpers in den Reaktivschaumstoff eingebracht.

In einer weiteren Ausführungsform werden zumindest zwei Fasern (F) in zwei unterschiedlichen Winkeln $\alpha$, $\alpha_1$ und $\alpha_2$, eingebracht, wobei der erste Winkel $\alpha_1$ vorzugsweise im Bereich von 0° bis 15° und der zweite Winkel $\alpha_2$ vorzugsweise im Bereich von 30 bis 50° liegt, insbesondere bevorzugt liegt $\alpha_1$ im Bereich von 0° bis 5° und $\alpha_2$ im Bereich von 40 bis 50°.

Bevorzugt werden alle Fasern (F) in einem Winkel $\alpha$ im Bereich von 10 bis 70°, bevorzugt von 30 bis 60°, insbesondere bevorzugt im Bereich von 30 bis 50°, noch mehr bevorzugt von 30 bis 45°, am meisten bevorzugt von 45° relativ zur Dickenrichtung (d) des Formkörpers in den Reaktivschaumstoff eingebracht.

Es ist darüber hinaus bevorzugt, dass außer der mindestens einen Faser (F) keine weitere Faser (F) in den Reaktivschaumstoff eingebracht ist.

Vorzugsweise enthält ein erfindungsgemäßer Formkörper eine Vielzahl von Fasern (F), vorzugsweise als Faserbündel, und/oder umfasst mehr als 10 Fasern (F) oder Faserbündel pro m², bevorzugt mehr als 1000 pro m², besonders bevorzugt 4000 bis 40 000 pro m². Vorzugsweise weisen sämtliche Fasern (F) im erfindungsgemäßen Formkörper den gleichen Winkel $\alpha$ oder zumindest einen annähernd gleichen Winkel (Abweichung von maximal +/- 5°, vorzugsweise +/- 2°, besonders bevorzugt +/- 1°) auf. Sämtliche Fasern (F) können parallel zueinander im Formkörper vorliegen. Ebenso ist es möglich und erfindungsgemäß bevorzugt, dass zwei oder mehr Fasern (F) in einem Winkel $\beta$ zueinander in dem Formkörper vorliegen. Unter dem Winkel $\beta$ wird im Rahmen der vorliegenden Erfindung der Winkel zwischen der senkrechten Projektion einer ersten Faser (F1) auf die Oberfläche der ersten Seite des Formkörpers und der senkrechten Projektion einer zweiten Faser (F2) auf die Oberfläche des Formkörpers verstanden, wobei beide Fasern in den Formkörper eingebracht sind.

Der Winkel $\beta$ liegt vorzugsweise im Bereich $\beta = 360°/n$, wobei n eine ganzzahlige Zahl ist. Bevorzugt liegt n im Bereich von 2 bis 6, besonders bevorzugt im Bereich von 2 bis 4. Beispielsweise liegt der Winkel $\beta$ bei 90°, 120° oder 180°. In einer weiteren Ausführungsform liegt der Winkel $\beta$ im Bereich von 80 bis 100°, im Bereich von 110 bis 130° oder im Bereich von 170 bis 190°. In einer weiteren Ausführungsform werden mehr als zwei Fasern (F) in einem Winkel $\beta$ zueinander eingebracht, beispielsweise drei oder vier Fasern (F). Diese drei oder vier Fasern (F) können jeweils zu den beiden benachbarten Fasern zwei unterschiedliche Winkel $\beta$, $\beta_1$ und $\beta_2$, aufweisen. Bevorzugt weisen alle Fasern (F) zu den beiden benachbarten Fasern (F) die gleichen Winkel $\beta=\beta_1=\beta_2$ auf. Beispielsweise beträgt der Winkel $\beta$ 90°, dann beträgt der Winkel $\beta_1$ zwischen der ersten Faser (F1) und der zweiten Faser (F2) 90°, der Winkel $\beta_2$ zwischen der zweiten Faser (F2) und dritten Faser (F3) 90°, der Winkel $\beta_3$ zwischen der dritten Faser (F3) und der vierten Faser (F4) 90 ° und der Winkel $\beta_4$ zwischen der vierten Faser (F4) und der ersten Faser (F1) ebenfalls 90 °. Als Winkel $\beta$ zwischen der ersten Faser (F1) (Referenz) und der zweiten (F2), dritten (F3) und vierten Faser (F4) ergeben sich dann im Uhrzeigersinn 90°, 180° und 270°. Analoge Betrachtungen gelten für die anderen möglichen Winkel.

Die erste Faser (F1) weist dann eine erste Richtung auf, die zweite Faser (F2), die in einem Winkel $\beta$ zur ersten Faser (F1) angeordnet ist, weist eine zweite Richtung auf. Bevorzugt liegen in der ersten Richtung und der zweiten Richtung eine ähnliche Anzahl von Fasern. Unter "ähnlich" wird vorliegend verstanden, dass der Unterschied zwischen der Anzahl der Fasern in jeder Richtung relativ zu der anderen Richtung < 30 %, besonders bevorzugt < 10 % und insbesondere bevorzugt < 2 % ist.

Die Fasern oder Faserbündel können in irregulären oder regulären Mustern eingebracht werden. Bevorzugt ist das Einbringen von Fasern oder Faserbündeln in regulären Mustern. Unter "regulären Mustern" wird im Rahmen der vorliegenden Erfindung verstanden, dass sämtliche Fasern parallel zueinander ausgerichtet sind und dass mindestens eine Faser oder Faserbündel zu allen direkt benachbarten Fasern oder Faserbündeln den gleichen Abstand (a) aufweist. Insbesondere bevorzugt weisen alle Fasern oder Faserbündel zu allen direkt benachbarten Fasern oder Faserbündeln den gleichen Abstand auf.

In einer weiteren bevorzugten Ausführungsform werden die Fasern oder Faserbündel so eingebracht, dass sie, bezogen auf ein rechtwinkliges Koordinatensystem, bei dem die Dickenrichtung (d) der z-Richtung entspricht, entlang der x-Richtung jeweils zueinander den gleichen Abstand ($a_x$) haben und entlang der y-Richtung den gleichen Abstand ($a_y$). Insbesondere bevorzugt weisen sie in x-Richtung und in y-Richtung den gleichen Abstand (a) auf, wobei $a=a_x=a_y$, ist.

Liegen zwei oder mehr Fasern (F) in einem Winkel $\beta$ zueinander vor, so weisen die ersten Fasern (F1), die parallel zueinander vorliegen, vorzugsweise ein reguläres Muster mit einem ersten Abstand ($a_1$) auf und die zweiten Fasern (F2), die parallel zueinander vorliegen und in einem Winkel $\beta$ zu den ersten Fasern (F1) liegen, vorzugsweise ein reguläres Muster mit einem zweiten Abstand ($a_2$). In einer bevorzugten Ausführungsform weisen die ersten Fasern (F1) und die zweiten Fasern (F2) jeweils ein reguläres Muster mit einem Abstand (a) auf. Dann gilt $a=a_1=a_2$.

Werden Fasern oder Faserbündel mit einem Winkel $\beta$ zueinander in den Reaktivschaumstoff eingebracht, so ist es bevorzugt, dass die Fasern oder Faserbündel innerhalb jeder Richtung einem regulären Muster folgen.

In einer bevorzugten Ausführungsform des Formkörpers gemäß der vorliegenden Erfindung

i) weist die Oberfläche von mindestens einer Seite des Formkörpers mindestens eine Vertiefung auf, vorzugsweise ist die Vertiefung ein Schlitz oder ein Loch, mehr bevorzugt wird mindestens eine Vertiefung auf der Oberfläche von mindestens einer Seite des Formkörpers im Anschluss an die Durchführung von Schritt IV) des Formschäumverfahrens erzeugt, und/oder

ii) ist die Gesamtoberfläche des Formkörpers zu mehr als 50 %, bevorzugt zu mehr als 80 %, insbesondere zu mehr als 95 %, geschlossen.

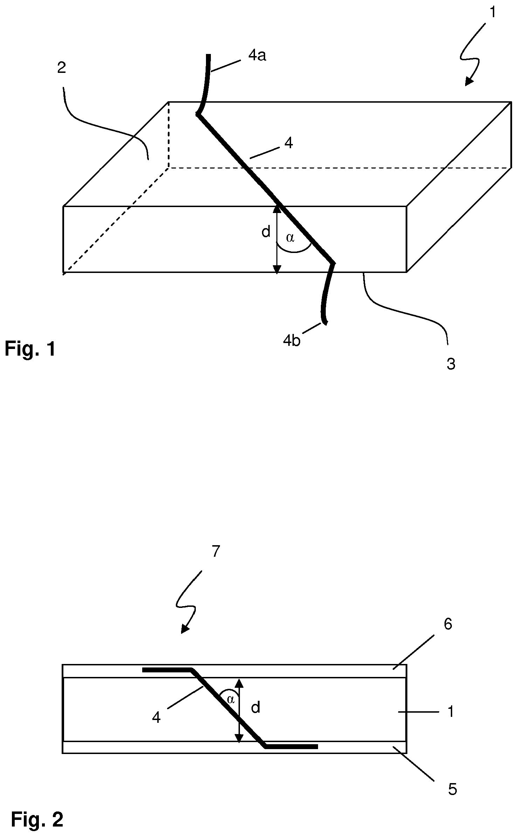

Figur 1 zeigt eine schematische Darstellung einer bevorzugten Ausführungsform des erfindungsgemäßen Formkörpers aus Reaktivschaumstoff (1) in einer perspektivischen Ansicht. (2) stellt dabei (die Oberfläche) einer ersten Seite des Formkörpers dar, während (3) eine zweite Seite des entsprechenden Formkörpers darstellt. Wie aus Figur 1 weiterhin ersichtlich, liegt die erste Seite (2) des Formkörpers gegenüber der zweiten Seite (3) dieses Formkörpers. Die Faser (F) ist durch (4) dargestellt. Ein Ende dieser Faser (4a) und somit der Faserbereich (FB1) ragt aus der ersten Seite (2) des Formkörpers heraus, während das andere Ende (4b) der Faser, das den Faserbereich (FB3) darstellt, aus der zweiten Seite (3) des Formkörpers herausragt. Der mittlere Faserbereich (FB2) befindet sich innerhalb des Formkörpers und ist somit von dem Reaktivschaumstoff umschlossen.

In Figur 1 befindet sich die Faser (4), die beispielsweise eine einzelne Faser oder ein Faserbündel, vorzugsweise ein Faserbündel, ist, in einem Winkel $\alpha$ relativ zu Dickenrichtung (d) des Formkörpers bzw. zur Orthogonalen (der Oberfläche) der ersten Seite (2) des Formkörpers. Der Winkel $\alpha$ beträgt 10 bis 70°, vorzugsweise 30 bis 60°, besonders bevorzugt 30 bis 50°, ganz besonders 30 bis 45°, insbesondere 45°. In Figur 1 ist der Übersichtlichkeit halber nur eine einzelne Faser (F) dargestellt.

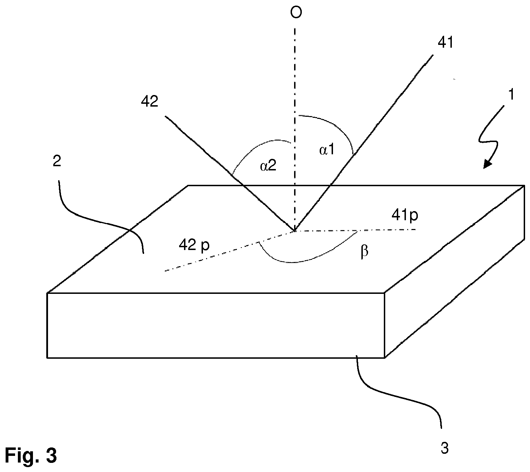

Figur 3 zeigt beispielhaft eine schematische Darstellung eines Teils der verschiedenen Winkel. Der in Figur 3 dargestellte Formkörper aus Reaktivschaumstoff (1) enthält eine erste Faser (41) und eine zweite Faser (42). In Figur 3 ist zur besseren Übersichtlichkeit lediglich der Faserbereich (FB1), der aus der ersten Seite (2) des Formkörpers herausragt, für die beiden Fasern (41) und (42) eingezeichnet. Die erste Faser (41) bildet relativ zur Orthogonalen (O) der Oberfläche der ersten Seite (2) des Formkörpers einen ersten Winkel $\alpha$ ($\alpha$1). Die zweite Faser (42) bildet relativ zur Orthogonalen (O) der Oberfläche der ersten Seite (2) einen zweiten Winkel $\alpha$ ($\alpha$2). Die senkrechte Projektion der ersten Faser (41) auf die erste Seite (2) des Formkörpers (41p) bildet mit der senkrechten Projektion der zweiten Faser (42) auf die erste Seite (2) des Formkörpers (42p) den Winkel $\beta$.

Der im Formkörper enthaltene Reaktivschaumstoff wird nach einem Formschäumverfahren hergestellt.

Formschäumverfahren sind dem Fachmann als solche bekannt. Vorzugsweise umfasst das Formschäumverfahren die folgenden Schritte I) bis IV).

I) Bereitstellung einer reaktiven Mischung, die zumindest eine erste Komponente (K1) und eine zweite Komponente (K2) enthält, wobei die erste Komponente (K1) und die zweite Komponente (K2) miteinander reagieren können,

II) Injektion der in Schritt I) bereitgestellten reaktiven Mischung in ein formgebendes Werkzeug,

III) Expansion der reaktiven Mischung in dem formgebenden Werkzeug unter Erhalt eines expandierten Schaumstoffs und

IV) Entformen des in Schritt III) erhaltenen expandierten Schaumstoffs aus dem formgebenden Werkzeug unter Erhalt des Reaktivschaumstoffs.

Als erste Komponente (K1) eignen sich erfindungsgemäß Isocyanate. Isocyanate als solche sind dem Fachmann bekannt. Im Rahmen der vorliegenden Erfindung werden unter Isocyanaten alle aliphatischen, cycloaliphatischen und aromatischen Di- und/oder Polyisocyanate verstanden. Aromatische Di- und/oder Polyisocyanate sind bevorzugt. Besonders bevorzugt als erste Komponente (K1) sind Toluoldiisocyanat (TDI), Diphenylmethandiisocyanat (MDI), polymere Diphenylmethandiisocyanate (PMDI) und Mischungen daraus. Insbesondere bevorzugt sind Mischungen aus Diphenylmethandiisocyanat (MDI) und polymere Diphenylmethandiisocyanate (PMDI) als erste Komponente (K1).

Die als erste Komponente (K1) eingesetzten Isocyanate können ganz oder teilweise mit Uretdion-, Carbamat-, Isocyanurat-, Carbodiimid-, Allophanat- und/oder Urethangruppen modifiziert sein. Bevorzugt sind sie mit Urethangruppen modifiziert. Derartige Isocyanate sind dem Fachmann als solche bekannt.

Als Isocyanate eignen sich zudem Präpolymere sowie Mischungen aus den oben beschriebenen Isocyanaten und Präpolymeren. Die Präpolymere werden aus den oben beschriebenen Isocyanaten sowie den weiter unten beschriebenen Polyethern, Polyestern oder Mischungen daraus, hergestellt.

Als erste Komponente (K1) geeignete Isocyanate weisen bevorzugt einen Isocyanatindex im Bereich von 100 bis 400, besonders bevorzugt im Bereich von 100 bis 300, insbesondere bevorzugt im Bereich von 100 bis 200, auf.

Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der reaktiven Mischung enthaltenen, gegenüber Isocyanat reaktiven Gruppen, einschließlich gegebenenfalls chemischer Treibmittel und Verbindungen mit Epoxidgruppen, verstanden, nicht aber die Isocyanatgruppe selbst.

Als zweite Komponente (K2) wird erfindungsgemäß mindestens eine Verbindung mit gegenüber Isocyanaten reaktiven Gruppen, eingesetzt. Derartige Verbindungen sind dem Fachmann bekannt.

Als Verbindung mit gegenüber Isocyanaten reaktiven Gruppen können beispielsweise alle Verbindungen eingesetzt werden, die zumindest zwei gegenüber Isocyanaten reaktiven Gruppen, wie OH-, SH-, NH- und/oder CH-azide Gruppen aufweisen. Bevorzugt als zweite Komponente (K2) ist eine Verbindung mit gegenüber Isocyanaten reaktiven Gruppen, die ausgewählt ist aus der Gruppe bestehend aus Polyetherpolyolen, Polyesterpolyolen und Polyaminen, wobei die mindestens eine Verbindung mit gegenüber Isocyanaten reaktiven Gruppen eine Funktionalität von 2 bis 8 aufweist und wobei, wenn die zweite Komponente (K2) ausgewählt ist aus Polyetherpolyolen und Polyesterpolyolen, die mindestens eine Verbindung mit gegenüber Isocyanaten reaktiven Gruppen eine mittlere Hydroxylzahl von 12 bis 1200 mg KOH/g aufweist.

Polyetherpolyole als solche sind dem Fachmann bekannt und können nach bekannten Verfahren hergestellt werden, beispielsweise durch anionische Polymerisation von Alkylenoxiden unter Zusatz mindestens eines Startermoleküls, das vorzugsweise 2 bis 6 reaktive Wasserstoffatome gebunden enthält, in Gegenwart von Katalysatoren. Als Katalysatoren können Alkalihydroxide wie beispielsweise Natrium- oder Kaliumhydroxid oder Alkalialkoholate wie Natriummethylat, Natrium- oder Kaliumethylat oder Kaliumisopropylat eingesetzt werden. Bei kationischer Polymerisation werden als Katalysatoren beispielsweise Lewis-Säuren wie Ammoniumpentachlorid, Bortrifluorid-Etherat oder Bleicherde eingesetzt. Weiter können als Katalysatoren auch Doppelmetallcyanidverbindungen, sogenannte DMC-Katalysatoren, sowie aminbasierte Katalysatoren eingesetzt werden.

Vorzugsweise werden als Alkylenoxide eine oder mehrere Verbindungen mit zwei bis vier Kohlenstoffatomen im Alkylenrest wie beispielsweise Ethylenoxid, Tetrahydrofuran, 1,2-Propylenoxid, 1,3-Propylenoxid, 1,2-Butylenoxid, 2,3-Butylenoxid sowie Mischungen daraus, eingesetzt. Bevorzugt werden Ethylenoxid und/oder 1,2-Propylenoxid eingesetzt.

Als Startermoleküle kommen beispielsweise Ethylenglycol, Diethylenglycol, Propylenglycol, Dipropylenglycol, Glyzerin, Trimethylolpropan, Pentaerythrit, Zuckerderivate wie Saccharose, Hexitderivate wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3-Propandiamin, 1,6-Hexandiamin, Ethanolamin, Diethanolamin, Triethanolamin sowie andere dem Fachmann bekannte zwei- oder mehrwertige Alkohole oder ein- oder mehrwertige Amine in Betracht.

Als Polyesterpolyole eignen sich alle dem Fachmann bekannten Polyesterpolyole. Beispielsweise können geeignete Polyesterpolyole durch Kondensation von mehrfunktionellen Alkoholen mit zwei bis zwölf Kohlenstoffen wie Ethylenglycol, Diethylenglycol, Butandiol, Trimethylolpropan, Glyzerin oder Pentaerythrit, mit mehrfunktionellen Carbonsäuren mit zwei bis zwölf Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren, den Anhydriden der genannten Säuren sowie Mischungen daraus, hergestellt. Bevorzugt werden aromatische Disäuren wie Phthalsäure, Isophthalsäure und/oder Terephthalsäure sowie deren Anhydride als Säurekomponente und Ethylenglycol, Diethylenglycol, 1,4-Butandiol und/oder Glyzerin als Alkoholkomponente eingesetzt.

Darüber hinaus können zur Herstellung der Polyesterpolyole anstatt der mehrfunktionellen Carbonsäuren auch entsprechende monomere Ester wie z.B. Dimethylterephthalat oder polymere Ester wie z.B. Polyethylenterephthalat, eingesetzt werden.

Als Polyamine eignen sich alle dem Fachmann bekannten Polyamine. Geeignete Polyamine sind sowohl aliphatische Polyamine als auch aromatische Polyamine. Bevorzugt sind aliphatische Polyamine, die im Rahmen der vorliegenden Erfindung auch als Polyalkylenpolyamine bezeichnet werden.

Unter dem Begriff "Polyalkylenpolyamin" werden im Rahmen der vorliegenden Erfindung aliphatische Amine verstanden, die mindestens drei Aminogruppen (primär, sekundär oder tertiär) enthalten.

Als Polyalkylenpolyamine sind Polyethylenimine besonders bevorzugt. Unter "Polyethyleniminen" werden im Rahmen der vorliegenden Erfindung sowohl oligomere als auch Homo- und Copolymere verstanden, welche die Gruppierungen $-CH_2-CH_2-NH-$ aufweisen und mindestens drei Aminogruppen enthalten.

Die erste Komponente (K1) und die zweite Komponente (K2) können miteinander reagieren. Diese Reaktionen sind dem Fachmann als solche bekannt.

Bei der Reaktion der ersten Komponente (K1) mit der zweiten Komponente (K2) bilden sich erfindungsgemäß Polyurethane, Polyisocyanurate oder Polyharnstoffe, bevorzugt bilden sich Polyisocyanate oder Polyurethane, am meisten bevorzugt bilden sich Polyurethane. Dem Fachmann sind diese Reaktionen bekannt.

Beispielsweise bilden sich Polyurethane, wenn als erste Komponente (K1) Isocyanate eingesetzt werden und als zweite Komponente (K2) Polyetherpolyole. Polyisocyanurate bilden sich bei dem Einsatz von Isocyanaten als erste Komponente (K1) und Polyesterpolyolen als zweite Komponente (K2). Polyharnstoffe werden erhalten durch die Reaktion von Isocyanaten als erste Komponente (K1) und Polyaminen als zweite Komponente (K2).

Es versteht sich von selbst, dass Polyurethane auch beispielsweise Isocyanurateinheiten, Allophanateinheiten, Harnstoffeinheiten, Carbodiimideinheiten, Biureteinheiten, Uretonimineinheiten sowie gegebenenfalls weitere Einheiten, die sich bei Additionsreaktionen von Isocyanaten als erste Komponente (K1) bilden können, enthalten können. Entsprechend können Polyisocyanurate beispielsweise auch Urethaneinheiten, Allophanateinheiten, Harnstoffeinheiten, Carbodiimideinheiten, Biureteinheiten, Uretonimineinheiten sowie gegebenenfalls weitere Einheiten, die sich bei Additionsreaktionen von Isocyanaten als erste Komponente (K1) bilden können, enthalten. Ebenso können Polyharnstoffe beispielsweise auch Isocyanurateinheiten, Allophanateinheiten, Urethaneinheiten, Carbodiimideinheiten, Biureteinheiten, Uretonimineinheiten sowie gegebenenfalls weitere Einheiten, die sich bei Additionsreaktionen von Isocyanaten als erste Komponente (K1) bilden können, enthalten.

Die Bereitstellung der reaktiven Mischung in Schritt I) kann nach allen dem Fachmann bekannten Methoden erfolgen.

Zur Bereitstellung der reaktiven Mischung werden die erste Komponente (K1) und die zweite Komponente (K2) sowie die gegebenenfalls in der reaktiven Mischung enthaltenen weiteren Komponenten und/oder Katalysatoren und/oder weiteren Additive üblicherweise gemischt. Das Mischen erfolgt beispielsweise bei einer Temperatur im Bereich von 15 bis 130 °C, bevorzugt im Bereich von 15 bis 90 °C, insbesondere bevorzugt im Bereich von 25 bis 55 °C.

Das Mischen kann nach allen dem Fachmann bekannten Methoden erfolgen, beispielsweise mechanisch mittels eines Rührers oder einer Rührschnecke oder unter hohem Druck in einem Gegenstrominjektionsverfahren.

Die in Schritt I) bereitgestellte reaktive Mischung kann zudem noch weitere Komponenten enthalten. Weitere Komponenten sind beispielsweise physikalische und/oder chemische Treibmittel.

Unter chemischen Treibmitteln werden im Rahmen der vorliegenden Erfindung Treibmittel verstanden, die zunächst in fester oder flüssiger Form in der reaktiven Mischung enthalten sind und dann durch chemische Reaktion mit den Komponenten (K1) und/oder (K2), sowie gegebenenfalls mit weiteren in der reaktiven Mischung enthaltenen Komponenten reagieren, wobei sich gasförmige Produkte bilden, die dann als eigentliches Treibmittel dienen.

Unter physikalischen Treibmitteln werden im Rahmen der vorliegenden Erfindung Treibmittel verstanden, die in der reaktiven Mischung gegebenenfalls unter Druck, gelöst oder emulgiert sind und unter den Bedingungen, bei denen die reaktive Mischung reagiert, verdampfen.

Geeignete chemische und physikalische Treibmittel sind dem Fachmann als solche bekannt.

Zu den chemischen Treibmitteln zählen beispielsweise Wasser und Carbonsäuren, insbesondere Ameisensäure.

Zu den physikalischen Treibmitteln zählen beispielsweise Kohlenwasserstoffe, insbesondere (cyclo)aliphatische Kohlenwasserstoffe, halogenierte Kohlenwasserstoffe, wie perfluorierte Alkane, Pentafluorhexan, Fluorchlorkohlenwasserstoffe, Etheresterketone und Acetale, sowie anorganische und organische Verbindungen, die beim Erhitzen Stickstoff freisetzen. Ebenso können Mischungen aus den genannten physikalischen Treibmitteln eingesetzt werden, beispielsweise aus (cyclo)aliphatischen Kohlenwasserstoffen mit 4 bis 8 Kohlenstoffatomen oder aus Fluorkohlenwasserstoffen, wie 1,1,1,3,3-Pentafluoropropan (HFC 245 fa), Trifluormethan, Difluormethan, 1,1,1,3,3-Pentafluorbutan (HFC 365 mfc), 1,1,1,2-Tetrafluorethan, Difluorethan und Heptafluorpropan. Zudem sind Kombinationen mit chemischen Treibmitteln möglich.

Bevorzugte (cyclo)aliphatische Kohlenwasserstoffe mit 4 bis 8 Kohlenstoffatomen sind beispielsweise n-Pentan, iso-Pentan und Cyclopentan.

Bevorzugt ist das Treibmittel der reaktiven Mischung ausgewählt aus der Gruppe bestehend aus n-Pentan, Iso-Pentan, Cyclopentan, 1,1,1,3,3-Pentafluorbutan, 1,1,1,3,3-Pentafluoropropan, 1,1,1,2,3,3,3-Heptafluoropropan, Wasser, Ameisensäure und Hydrofluoroolefinen, wie 1,1,1,4,4,4 hexafluoro-2-butene und 1-chloro-3,3,3-trifluoro-propene.

Weiterhin bevorzugt enthält das Treibmittel Wasser, insbesondere bevorzugt besteht das Treibmittel aus Wasser.

Zudem kann die reaktive Mischung Katalysatoren enthalten. Als Katalysatoren können alle Verbindungen eingesetzt werden, die die Reaktion der ersten Komponente (K1) mit der zweiten Komponente (K2) beschleunigen. Solche Verbindungen sind bekannt und beispielsweise im "Kunststoffhandbuch Band 7, Polyurethan, Karl Hanser Verlag, 3. Auflage 1993, Kapitel 3.4.1" beschrieben.

Darüber hinaus kann die in Schritt I) bereitgestellte reaktive Mischung weitere Additive enthalten. Derartige Additive sind dem Fachmann als solche bekannt. Additive sind beispielsweise Stabilisatoren, grenzflächenaktive Substanzen, Flammschutzmittel und Kettenverlängerer.

Stabilisatoren werden auch als Schaumstabilisatoren bezeichnet. Unter Stabilisatoren werden im Rahmen der vorliegenden Erfindung Stoffe verstanden, welche die Ausbildung einer regelmäßigen Zellstruktur bei der Schaumbildung fördern. Geeignete Stabilisatoren sind beispielsweise silikonhaltige Schaumstabilisatoren wie Siloxan-Oxalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Tolouidin, Bisphenol A, alkyliertem Bisphenol A, Polyvinylalkohol sowie weitere Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Tolouidin, Formaldehyd und Naphthol, Formaldehyd und Alkylnaphthol sowie Formaldehyd und Bisphenol A oder Mischungen aus zwei oder mehrere dieser Schaumstabilisatoren.

Grenzflächenaktive Substanzen werden auch als oberflächenaktive Substanzen bezeichnet. Unter grenzflächenaktiven Substanzen werden Verbindungen verstanden, welche zur Unterstützung der Homogenisierung der Ausgangsstoffe dienen und gegebenenfalls auch geeignet sind, die Zellstruktur der Kunststoffe zu regulieren. Dazu zählen beispielsweise Emulgatoren wie Natriumsalze von Rizinusölsulfaten oder von Fettsäuren sowie Salze von Fettsäuren mit Aminen, z.B. ölsaures Diethylamin, stearinsaures Diethanolamin, rizinolsaures Diethanolamin, Salze von Sulfonsäuren, z.B. Alkali- oder Ammoniumsalze von Dodecylbenzoldisulfonsäure, Dinaphtylmethandisulfonsäure und Rizinolsäure.

Als Flammschutzmittel können beispielsweise organische Phosphorsäure- und/oder Phosphonsäureester eingesetzt werden. Vorzugsweise werden gegenüber Isocyanatgruppen nicht-reaktive Verbindungen eingesetzt. Auch Chlor-enthaltende Phosphorsäureester gehören zu den bevorzugten Verbindungen. Geeignete Flammschutzmittel sind beispielsweise Tris-(2-chlorpropyl)phosphat, Triethylphosphat, Diphenylkresylphosphat, Diethylethanphosphinat, Trikresylphosphat, Tris-(2-chlorethyl)-phosphat, Tris-(1,3-dichlorpropyl)-phosphat, Tris-(2,3-dibrompropopyl)-phosphat, Tetrakis-(2-chlorethyl)-ethylendiphosphat, Dimethylmethanphosphonat, Diethanolaminomethylphosphonsäure-Diethylester sowie handelsübliche halogenierte Flammschutzpolyole.

Daneben können beispielsweise auch Brom-enthaltende Flammschutzmittel zum Einsatz kommen. Als Brom-enthaltende Flammschutzmittel werden vorzugsweise Verbindungen eingesetzt, die gegenüber der Isocyanatgruppe reaktiv sind. Derartige Verbindungen sind beispielsweise Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Außer den bereits genannten halogensubstituierten Phosphaten können beispielsweise auch anorganische oder organische Flammschutzmittel wie roter Phosphor, Aluminiumoxidhydrat, Antimontrioxid, Arsenoxid, Ammoniumpolyphosphat und Calciumsulfat, Blähgraphit oder Cyanursäurederivate wie z.B. Melamin oder Mischungen aus zwei Flammschutzmitteln wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-Polyadditionsprodukte verwendet werden.

Unter Kettenverlängerern werden bifunktionelle Verbindungen verstanden. Derartige Verbindungen sind dem Fachmann als solche bekannt. Geeignete Kettenverlängerer sind beispielsweise aliphatische, cycloaliphatische und/oder aromatische Diole mit zwei bis vierzehn, vorzugsweise zwei bis zehn Kohlenstoffatomen, wie Ethylenglycol, 1,2-Propandiol, 1,3-Propandiol, 1,2-Pentandiol, 1,3-Pentandiol, 1,10-Dekandiol, 1,2-Dihydroxycyclohexan, 1,3-Dihydroxycyclohexan, 1,4-Dihydroxycyclohexan, Diethylenglycol, Triethylenglycol, Dipropylenglycol, Tripropylenglycol, 1,4-Butandiol, 1,6-Hexandiol und Bis-(2-hydroxyethyl)-hydrochinon.

In Schritt II) wird die in Schritt I) bereitgestellte reaktive Mischung in ein formgebendes Werkzeug injiziert. Verfahren hierzu sind dem Fachmann bekannt. Üblicherweise erfolgt die Injektion der reaktiven Mischung in das formgebende Werkzeug diskontinuierlich.

Die Injektion der reaktiven Mischung kann beispielsweise unter erhöhtem Druck erfolgen.

Der Umsatz der reaktiven Mischung, bezogen auf die Isocyanatgruppen, liegt während Schritt II) bevorzugt bei weniger als 90 %.

Die Menge an reaktiver Mischung, die in Schritt II) in das formgebende Werkzeug injiziert wird, wird so bemessen, dass der in Schritt IV) erhaltene Reaktivschaumstoff die gewünschte Gesamtdichte und Schaumstoffstruktur aufweist. Erfindungsgemäß ist es bevorzugt, dass der Verdichtungsgrad im Bereich von 1,05 bis 4, bevorzugt im Bereich von 1,1 bis 3, liegt.

Als Verdichtungsgrad bezeichnet man das Verhältnis aus der Enddichte des Reaktivschaumstoffs hergestellt durch das Formschäumverfahren zu der Dichte des frei geschäumten Reaktivschaumstoffs.

Das formgebende Werkzeug kann Träger- und/oder Trennschichten umfassen. Derartige Träger- und/oder Trennschichten sind dem Fachmann bekannt.

Vorzugsweise ist die Träger- und/oder Trennschicht eine Schicht (S2). Für diese Träger- und/oder Trennschicht gelten die weiter unten beschriebenen Ausführungen und Bevorzugungen für die Schicht (S2).

In Schritt III) wird die reaktive Mischung expandiert. Die Expansion der reaktiven Mischung erfolgt durch die Reaktion der ersten Komponente (K1) mit der zweiten Komponente (K2). Derartige Reaktionen sind dem Fachmann bekannt. Zudem kann die Expansion gefördert werden durch das gegebenenfalls in der reaktiven Mischung enthaltende chemische und/oder physikalische Treibmittel.

Die Expansion der reaktiven Mischung kann beispielsweise initiiert werden durch den gegebenenfalls in der reaktiven Mischung enthaltenen Katalysator.

Während der Expansion der reaktiven Mischung wird die reaktive Mischung so weit expandiert, dass der erhaltene expandierte Schaumstoff das formgebende Werkzeug vollständig ausfüllt. Enthält das formgebende Werkzeug Träger- und/oder Trennschichten, so verbindet sich der expandierte Schaumstoff mit diesen.

Die Formwerkzeugtemperatur während Schritt III) liegt üblicherweise im Bereich von 20 bis 200 °C, vorzugsweise im Bereich von 30 bis 140 °C, besonders bevorzugt im Bereich von 30 bis 80 °C. Bevorzugt liegt die Formwerkzeugtemperatur während sämtlichen Schritten I) bis IV) des Formschäumverfahrens im Bereich von 20 bis 200 °C, bevorzugt im Bereich von 30 bis 140 °C, insbesondere bevorzugt im Bereich von 30 bis 80 °C.

In Schritt IV) wird der in Schritt III) erhaltene expandierte Schaumstoff aus dem formgebenden Werkzeug entformt unter Erhalt des Reaktivschaumstoffs.

Verfahren zur Entformung des in Schritt III) erhaltenen expandierten Schaumstoff sind dem Fachmann als solche bekannt.

Bevorzugt wird das Formschäumverfahren zur Herstellung des Reaktivschaumstoffs als one-shot-Verfahren durchgeführt, besonders bevorzugt mit Hilfe der Niederdruck-Technik oder der Hochdruck-Technik. Dabei werden üblicherweise geschlossene und gegebenenfalls temperierte formgebende Werkzeuge eingesetzt. Das one-shot-Verfahren wird für Polyurethane beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7.

Ein one-shot-Verfahren ist dem Fachmann als solches bekannt.

Beim one-shot-Verfahren werden die Schritte I) und II) direkt nacheinander oder gleichzeitig durchgeführt. Üblicherweise werden im one-shot-Verfahren die in der reaktiven Mischung enthaltene erste Komponente (K1) und die zweite Komponente (K2) sowie gegebenenfalls die weiteren Komponenten, der Katalysator und die weiteren Additive während der Injektion in das formgebende Werkzeug miteinander vermischt, beispielsweise in einem statischen oder dynamischen Mischer.

Der erhaltene Reaktivschaumstoff kann in Anschluss an Schritt IV) gegebenenfalls spanend und/oder thermisch bearbeitet werden. Verfahren hierzu sind dem Fachmann als solche bekannt. Vorzugsweise findet nach der Entformung gemäß Schritt IV) keine spanende und/oder thermische Bearbeitung des Reaktivschaumstoffs statt.

Bezogen auf ein rechtwinkliges Koordinatensystem wird die Länge des so erhaltenen Reaktivschaumstoffs als x-Richtung bezeichnet, die Breite als y-Richtung und die Dicke als z-Richtung.

Der erfindungsgemäße Reaktivschaumstoff kann beliebige Größen aufweisen.

Üblicherweise weist der erfindungsgemäß hergestellte Reaktivschaumstoff eine Dicke (z-Richtung) im Bereich von 4 bis 200 mm, vorzugsweise im Bereich von 5 bis 60 mm, eine Länge (x-Richtung) von mindestens 200 mm, vorzugsweise von mindestens 400 mm und eine Breite (y-Richtung) von mindestens 200 mm, vorzugsweise von mindestens 400 mm auf.

Der Reaktivschaumstoff weist üblicherweise eine Länge (x-Richtung) von maximal 4000 mm, bevorzugt von maximal 2500 mm und/oder eine Breite (y-Richtung) von maximal 4000 mm, bevorzugt von maximal 2500 mm auf.

Der Reaktivschaumstoff ist erfindungsgemäß auf Basis eines Polyurethans, eines Polyharnstoffs oder eines Polyisocyanurats. Bevorzugt ist der Reaktivschaumstoff auf Basis eines Polyurethans.

Im Rahmen der vorliegenden Erfindung kann der Reaktivschaumstoff neben dem Polyurethan, dem Polyharnstoff oder dem Polyisocyanurat weitere Polymere enthalten, beispielsweise als Blend aus dem Polyurethan, dem Polyharnstoff oder dem Polyisocyanurat und einem weiteren Polymer. Verfahren zur Herstellung dieser Blends sind dem Fachmann bekannt.

Ist der Reaktivschaumstoff auf Basis eines Polyurethans, so ist es außerdem bevorzugt, dass es sich um einen Polyurethanschaumstoff, insbesondere um einen Polyurethanhalbhartschaumstoff, um einen Polyurethanweichschaumstoff oder um einen Polyurethanhartschaumstoff handelt.

Darüber hinaus ist es bevorzugt, dass der Reaktivschaumstoff auf Basis eines Polyurethans, eines Polyharnstoffs oder eines Polyisocyanurats ist, das jeweils nach einem Formschäumverfahren, umfassend die oben genannten Schritte I) bis IV) hergestellt wird, und bei dem die in Schritt I) bereitgestellte reaktive Mischung als erste Komponente (K1) mindestens ein Polyisocyanat und als zweite Komponente (K2) mindestens eine Verbindung mit gegenüber Isocyanaten reaktiven Gruppen sowie als weitere Komponente mindestens ein Treibmittel enthält.

Am meisten bevorzugt ist der Reaktivschaumstoff auf Basis eines Polyurethans, das nach einem Formschäumverfahren, umfassend die oben genannten Schritte I) bis IV) hergestellt wird und bei dem die erste Komponente (K1) ausgewählt ist aus Diphenylmethyldiisocyanat und polymeren Diphenylmethandiisocyanat und die zweite Komponente (K2) mindestens eine Verbindung mit gegenüber Isocyanaten reaktiven Gruppen ist, die ausgewählt ist aus der Gruppe bestehend aus Polyetherpolyolen, Polyesterpolyolen und Polyaminen, wobei die mindestens eine Verbindung mit gegenüber Isocyanaten reaktiven Gruppen eine Funktionalität von 2 bis 8 aufweist und wobei, wenn die zweite Komponente (K2) ausgewählt ist aus Polyetherpolyolen und Polyesterpolyolen, die mindestens eine Verbindung mit gegenüber Isocyanaten reaktiven Gruppen eine mittlere Hydroxylzahl von 12 bis 1200 mg KOH/g aufweist und die reaktive Mischung eine weitere Komponente, die mindestens ein Treibmittel, das Wasser enthält, umfasst.

Für die in der in Schritt I) bereitgestellten reaktiven Mischung enthaltene erste Komponente (K1) und die zweite Komponente (K2) gelten die zuvor beschriebenen Ausführungen und Bevorzugungen für die erste Komponente (K1) und die zweite Komponente (K2) entsprechend.

Der Reaktivschaumstoff weist üblicherweise eine Glasübergangstemperatur von mindestens 80 °C, bevorzugt von mindestens 110 °C und insbesondere bevorzugt von mindestens 130 °C auf, bestimmt mittels Differenzthermoanalyse (DTA; differential scanning calorimetry; DSC). Die Glasübergangstemperatur des Reaktivschaumstoffs liegt im Allgemeinen bei höchstens 400 °C, bevorzugt bei höchstens 300 °C, insbesondere bei höchstens 200 °C, bestimmt mittels Differenzthermoanalyse (DTA).

Gegenstand der vorliegenden Erfindung ist außerdem ein Paneel, das mindestens einen erfindungsgemäßen Formkörper und mindestens eine Schicht (S1) umfasst. Ein "Paneel" kann gegebenenfalls in Fachkreisen auch als "Sandwich", "Sandwichmaterial", "Laminat" und/oder "Compositartikel" bezeichnet werden.

In einer bevorzugten Ausführungsform des Paneels weist das Paneel zwei Schichten (S1) auf, und die beiden Schichten (S1) sind jeweils an einer Seite des Formkörpers angebracht, die der jeweils anderen Seite im Formkörper gegenüberliegt.

In einer Ausführungsform des erfindungsgemäßen Paneels umfasst die Schicht (S1) mindestens ein Harz, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al. (Advances in Polymer Science, 184, S. 1 - 95, 2005), Pham et al. (Ullmann's Encyclopedia of Industrial Chemistry, Vol. 13, 2012), Fahnler (Polyamide, Kunststoff Handbuch 3/4, 1998) und Younes (WO12134878 A2).

Erfindungsgemäß bevorzugt ist außerdem ein Paneel, bei dem

i) der Faserbereich (FB1) der Faser (F) teilweise oder vollständig, vorzugsweise vollständig, mit der ersten Schicht (S1) in Kontakt ist, und/oder

ii) der Faserbereich (FB3) der Faser (F) teilweise oder vollständig, vorzugsweise vollständig, mit der zweiten Schicht (S1) in Kontakt ist, und/oder

iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, mehr bevorzugt aus porösen flächigen Fasermaterialien oder porösen polymeren Folien, insbesondere bevorzugt aus Papier, Glasfasern oder Kohlenstofffasern in Form von Vliesen, Gelegen oder Geweben.

Als Porosität wird das Verhältnis (dimensionslos) von Hohlraumvolumen (Porenvolumen) zu dem Gesamtvolumen eines Reaktivschaumstoffs bezeichnet. Sie wird beispielsweise durch bildanalytische Auswertung mikroskopischer Aufnahmen bestimmt, indem das Hohlraum- bzw. Porenvolumen durch das Gesamtvolumen geteilt wird. Die Gesamtporosität eines Stoffes setzt sich zusammen aus der Summe der Hohlräume, die untereinander und mit der Umgebung in Verbindung stehen (offene Porosität) und den nicht miteinander verbundenen Hohlräumen (geschlossene Porosität). Bevorzugt sind Schichten (S2), die eine hohe offene Porosität aufweisen.

In einer weiteren erfindungsgemäßen Ausführungsform des Paneels enthält die mindestens eine Schicht (S1) zusätzlich mindestens ein faserförmiges Material, wobei

i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m$^2$ enthält, und/oder

ii) das faserförmige Material Fasern aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern enthält.

Für die Naturfasern und die polymeren Fasern gelten die zuvor beschriebenen Ausführungen.

Eine Schicht (S1), die zusätzlich mindestens ein faserförmiges Material enthält, wird auch als faserverstärkte Schicht, insbesondere als faserverstärkte Harzschicht, sofern die Schicht (S1) ein Harz umfasst, bezeichnet.

Figur 2 zeigt eine weitere bevorzugte Ausführungsform der vorliegenden Erfindung. In einer zweidimensionalen Seitansicht ist ein erfindungsgemäßes Paneel (7) dargestellt, das einen erfindungsgemäßen Formkörper (1) umfasst, wie beispielsweise vorstehend im Rahmen der Ausführungsform zu Figur 1 dargestellt. Soweit nicht anders ausgeführt, haben die Bezugszeichen bei sonstigen Abkürzungen in den Figuren 1 und 2 die gleiche Bedeutung.

Bei der Ausführungsform gemäß Figur 2 umfasst das erfindungsgemäße Paneel zwei Schichten (S1), die durch (5) und (6) dargestellt sind. Die beiden Schichten (5) und (6) befinden sich somit an jeweils zu einander gegenüberliegenden Seiten des Formkörpers (1). Bei den beiden Schichten (5) und (6) handelt es sich vorzugsweise um Harzschichten oder faserverstärkte Harzschichten. Wie aus Figur 2 weiterhin ersichtlich, sind die beiden Enden der Faser (4) von der jeweiligen Schicht (5) bzw. (6) umschlossen.

Gegebenenfalls können zwischen dem Formkörper (1) und der ersten Schicht (5) und/oder zwischen dem Formkörper (1) und der zweiten Schicht (6) eine oder mehrere weitere Schichten enthalten sein. Wie vorstehend für Figur 1 beschrieben, ist auch in Figur 2 der Einfachheit halber eine einzige Faser (F) durch (4) dargestellt. Hinsichtlich der Anzahl an Fasern bzw. Faserbündeln in der Praxis gelten die sinngemäßen Aussagen wie vorstehend für Figur 1 aufgeführt.

Darüber hinaus ist ein Paneel bevorzugt, bei dem zumindest eine der folgenden Alternativen erfüllt ist:

i) der im Paneel enthaltene Formkörper enthält mindestens eine Seite, die nicht mechanisch und/oder thermisch bearbeitet wurde, und/oder

ii) der im Paneel enthaltene Formkörper weist mindestens eine Schicht (S2) auf, die im Formschäumverfahren umfassend die Schritte I) bis V), in Schritt II) als Trägerfolie auf den Reaktivschaumstoff aufgebracht wurde, und/oder

iii) die mindestens eine Schicht (S1) umfasst ein Harz und der Reaktivschaumstoff des Formkörpers weist eine Harzaufnahme von weniger als 1000 $g/m^2$, bevorzugt von weniger als 500 $g/m^2$ und besonders bevorzugt von weniger als 100 $g/m^2$ auf, und/oder

iv) das Paneel weist eine Schälfestigkeit von mehr als 200 $J/m^2$, bevorzugt von mehr als 500 $J/m^2$, besonders bevorzugt von mehr als 2000 $J/m^2$ auf, und/oder

v) der Reaktivschaumstoff des im Paneel enthaltenen Formkörpers weist eine spezifische Scherfestigkeit, gemessen parallel zu der mindestens einen Schicht (S1), im Bereich von 2 bis 25 $kPa/(kg/m^3)$, bevorzugt im Bereich von 3 bis 15 $kPa/(kg/m^3)$, besonders bevorzugt im Bereich von 4 bis 12 $kPa/(kg/m^3)$ auf, und/oder

vi) der Reaktivschaumstoff des im Paneel enthaltenen Formkörpers weist ein Schubmodul gemessen parallel zu der mindestens einen Schicht (S1) im Bereich von 0,05 bis 0,6 $MPa/(kg/m^3)$, bevorzugt im Bereich von 0,05 bis 0,5 $MPa/(kg/m^3)$, besonders bevorzugt im Bereich von 0,05 bis 0,2 $MPa/(kg/m^3)$ auf, und/oder

vii) der im Paneel enthaltene Formkörper weist eine spezifische Scherfestigkeit gemessen parallel zu der mindestens einen Schicht (S1) von mindestens 5 $kPa/(kg/m^3)$, bevorzugt von mindestens 8 $kPa/(kg/m^3)$, besonders bevorzugt von mindestens 12 $kPa/(kg/m^3)$ auf, und/oder

viii) der im Paneel enthaltene Formkörper weist im Paneel ein Schubmodul gemessen parallel zu der mindestens einen Schicht (S1) von mindestens 0,2 $MPa/(kg/m^3)$, bevorzugt von mindestens 0,6 $MPa/(kg/m^3)$, besonders bevorzugt von mindestens 1,0 $MPa/(kg/m^3)$, auf.

Die spezifische Scherfestigkeit und das Schubmodul werden gemäß DIN 53294 (Stand: 1982) und die Dichte nach ISO 845 (Stand: 2007) bestimmt.

Das Schubmodul des Formkörpers gemäß Alternative vi) bezieht sich auf das Schubmodul des Formkörpers ohne die mindestens eine Schicht (S1). Lediglich die Messung erfolgt parallel zu der Seite, an der im Paneel die mindestens eine Schicht (S1) aufgebracht wird.

Die Schälfestigkeit des Paneels wird mit single cantilever beam (SCB)-Proben bestimmt. Die Dicke der Formkörper liegt bei 20 mm, die Schichten (S1) bestehen aus jeweils etwa 2 mm dicken quasiisotropen glasfaserverstärkten Epoxidharzschichten. Die Paneele werden dann in einer Zwick Z050 Zugprüfmaschine mit einer Geschwindigkeit von 5 mm/min geprüft, wobei das Paneel drei- bis viermal be- und entlastet wird. Das Risswachstum bzw. der Zuwachs bei jedem Belastungszyklus ($\Delta a$) wird optisch ermittelt. Aus dem Kraft-Weg-Verlauf wird die Risswachstumsenergie ($\Delta U$) ermittelt. Daraus wird die Risszähigkeit bzw. Schälfestigkeit ermittelt als

$$G_{IC} = \frac{\Delta U}{B\,\Delta a}$$

mit B als Probenbreite.

Zur Bestimmung der Harzaufnahme werden neben den eingesetzten Harzsystemen, dem Reaktivschaumstoff und Glasgelegen die folgende Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele, nachfolgend auch als Sandwichmaterialien bezeichnet, werden aus den Formkörpern durch Aufbringung faserverstärkter Decklagen mittels Vakuuminfusion hergestellt. An der Ober- und Unterseite der (faserverstärkten) Schaumstoffe werden je zwei Lagen Quadrax-Glasgelege (Roving: E-Glass SE1500, OCV; Textil: Saertex, isotropes Laminat [0°/-45°/90°45°] mit je 1200 g/m$^2$) aufgebracht. Für die Bestimmung der Harzaufnahme wird zwischen dem Formkörper, nachfolgend auch als Kernmaterial bezeichnet, und dem Glasgelege, im Gegensatz zur standardmäßigen Herstellung der Paneele, eine Trennfolie eingelegt. Damit ist die Harzaufnahme des reinen Formkörpers bestimmbar. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 +/- 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Reaktivschaumstoffen und glasfaserverstärkten Decklagen bestehen.

Zu Beginn werden die Formkörper nach ISO 845 (Stand Oktober 2009) vermessen, um die Rohdichte des Formkörpers zu erhalten. Nach dem Aushärten des Harzsystems werden die verarbeiteten Paneele besäumt, um überschüssige Harzansammlungen in den Randbereichen durch nicht passend anliegende Vakuumfolie zu eliminieren.

Anschließend werden die Decklagen entfernt und die enthaltenen Formkörper erneut durch ISO 845 vermessen. Aus der Differenz der Dichten ergibt sich die absolute Harzaufnahme. Durch Multiplikation mit der Dicke des Formkörpers ergibt sich die entsprechende Harzaufnahme in kg/m$^2$.

Gegenstand der vorliegenden Erfindung ist weiterhin ein Verfahren zur Herstellung des erfindungsgemäßen Formkörpers, wobei mindestens eine Faser (F) in den Reaktivschaumstoff teilweise eingebracht wird, wodurch sich die Faser (F) mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt.

In einer Ausführungsform des erfindungsgemäßen Verfahrens erfolgt das teilweise Einbringen der mindestens einen Faser (F) in den Reaktivschaumstoff durch Einnähen unter Verwendung einer Nadel, vorzugsweise erfolgt das teilweise Einbringen durch die Schritte a) bis f):

a) gegebenenfalls Aufbringen von mindestens einer Schicht (S2) auf mindestens eine Seite des Reaktivschaumstoffs,

b) Erzeugung von einem Loch je Faser (F) im Reaktivschaumstoff und gegebenenfalls in der Schicht (S2), wobei sich das Loch von einer ersten Seite zu einer zweiten Seite des Reaktivschaumstoffs und gegebenenfalls durch die Schicht (S2) erstreckt,

c) Bereitstellung von mindestens einer Faser (F) auf der zweiten Seite des Reaktivschaumstoffs,

d) Durchführen einer Nadel von der ersten Seite des Reaktivschaumstoffs durch das Loch zu der zweiten Seite des Reaktivschaumstoffs und gegebenenfalls Durchführung der Nadel durch die Schicht (S2),

e) Befestigen von mindestens einer Faser (F) an der Nadel auf der zweiten Seite des Reaktivschaumstoffs, und

f) Rückführen der Nadel samt Faser (F) durch das Loch, so dass die Faser (F) sich mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt, besonders bevorzugt werden die Schritte b) und d) gleichzeitig durchgeführt.

Das Aufbringen von mindestens einer Schicht (S2) in Schritt a) kann beispielsweise wie vorstehend beschrieben während Schritt II) des Formschäumverfahrens erfolgen.

In einer besonders bevorzugten Ausführungsform werden die Schritte b) und d) gleichzeitig durchgeführt. In dieser Ausführungsform wird das Loch von der ersten Seite zu der zweiten Seite des Reaktivschaumstoffs durch das Durchführen einer Nadel von der ersten Seite des Reaktivschaumstoffs zu der zweiten Seite des Reaktivschaumstoffs erzeugt.

In dieser Ausführungsform kann das Einbringen der mindestens einen Faser (F) beispielsweise die folgenden Schritte umfassen:

a) gegebenenfalls Aufbringen einer Schicht (S2) auf mindestens eine Seite des Reaktivschaumstoffs,

b) Bereitstellen von mindestens einer Faser (F) auf der zweiten Seite des Reaktivschaumstoffs,

c) Erzeugung von einem Loch je Faser (F) im Reaktivschaumstoff und gegebenenfalls in der Schicht (S2), wobei sich das Loch von der ersten Seite zu einer zweiten Seite des Reaktivschaumstoffs und gegebenenfalls durch die Schicht (S2) erstreckt und wobei die Erzeugung des Lochs durch das Durchführen einer Nadel durch den Reaktivschaumstoffs und gegebenenfalls durch die Schicht (S2) erfolgt,

d) Befestigen von mindestens einer Faser (F) an der Nadel auf der zweiten Seite des Reaktivschaumstoffs,

e) Rückführen der Nadel samt Faser (F) durch das Loch, so dass die Faser (F) sich mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers oder gegebenenfalls aus der Schicht (S2) herausragt und der Faserbereich (FB3) aus einer zweiten Seite des Formkörpers herausragt,

f) gegebenenfalls Abschneiden der Faser (F) an der zweiten Seite und

g) gegebenenfalls Aufschneiden der an der Nadel gebildeten Schlaufe der Faser (F).

In einer bevorzugten Ausführungsform wird als Nadel eine Hakennadel eingesetzt und mindestens eine Faser (F) in Schritt d) in die Hakennadel eingehängt.

In einer weiteren bevorzugten Ausführungsform werden mehrere Fasern (F) gleichzeitig in den Reaktivschaumstoff gemäß der vorher beschriebenen Schritte eingebracht.

Im erfindungsgemäßen Verfahren ist es außerdem bevorzugt, dass Vertiefungen im Formkörper teilweise oder vollständig vor dem Einbringen von mindestens einer Faser (F) in den Reaktivschaumstoff eingebracht werden.

Weiterhin Gegenstand der vorliegenden Erfindung ist ein Verfahren zur Herstellung des erfindungsgemäßen Paneels, bei dem die mindestens eine Schicht (S1) als reaktives viskoses Harz auf einen erfindungsgemäßen Formkörper erzeugt, aufgebracht und ausgehärtet wird, vorzugsweise durch Flüssigimprägnierverfahren, besonders bevorzugt durch Druck- bzw. vakuumunterstützte Imprägnierverfahren, insbesondere bevorzugt durch Vakuuminfusion oder druckunterstützte Injektionsverfahren, am meisten bevorzugt durch Vakuuminfusion. Flüssigimprägnierverfahren sind dem Fachmann als solche bekannt und werden beispielsweise in Wiley Encyclopedia of Composites (2nd Edition, Wiley, 2012), Parnas et al. (Liquid Composite Moulding, Hanser, 2000) und Williams et al. (Composites Part A, 27, S. 517 - 524, 1997) ausführlich beschrieben.

Zur Herstellung des erfindungsgemäßen Paneels können verschiedene Hilfsmaterialien eingesetzt werden. Geeignete Hilfsmaterialien für die Herstellung durch Vakuuminfusion sind beispielsweise Vakuumfolie, bevorzugt aus Nylon, Vakuumdichtband, Fließhilfe, bevorzugt aus Nylon, Trennfolie, bevorzugt aus Polyolefin, Abreißgewebe, bevorzugt aus Polyester sowie eine semipermeable Folie, vorzugsweise eine Membranfolie, besonders bevorzugt eine PTFE Membranfolie und Absaugvlies, bevorzugt aus Polyester. Die Wahl geeigneter Hilfsmaterialien richtet sich nach dem zu fertigenden Bauteil, dem gewählten Prozess und den eingesetzten Materialien, speziell dem Harzsystem. Beim Einsatz von Harzsystemen auf der Basis von Epoxid und Polyurethan werden bevorzugt Fließhilfen aus Nylon, Trennfolien aus Polyolefin, Abreißgewebe aus Polyester sowie eine semipermeable Folien als PTFE-Membranfolien und Absaugvliese aus Polyester eingesetzt.

Diese Hilfsmaterialien können auf verschiedene Arten bei den Verfahren zur Herstellung des erfindungsgemäßen Paneels eingesetzt werden. Paneele werden besonders bevorzugt aus den Formkörpern durch Aufbringung faserverstärkter Decklagen mittels Vakuuminfusion hergestellt. In einem typischen Aufbau werden zur Herstellung des erfindungsgemäßen Paneels an der Ober- und Unterseite der Formkörper faserförmige Materialien und ggf. weitere Schichten aufgebracht. Anschließend werden Abreißgewebe und Trennfolien platziert. Bei der Infusion des flüssigen Harzsystems kann mit Fließhilfen und / oder Membranfolien gearbeitet werden. Besonders bevorzugt sind die folgenden Varianten:

i) Einsatz einer Fließhilfe auf nur einer Seite des Aufbaus, und/oder

ii) Einsatz einer Fließhilfe auf beiden Seiten des Aufbaus, und/oder

iii) Aufbau mit einer semipermeablen Membran (VAP-Aufbau), diese wird vorzugsweise flächig über den Formkörper drapiert, auf dem Fließhilfen, Trennfolie und Abreißgewebe auf einer oder beiden Seiten eingesetzt werden und die semipermeable Membran durch Vakuumdichtband zur Formoberfläche hin abgedichtet wird, das Absaugvlies wird auf der Formkörper fremden Seite der semipermeablen Membran eingesetzt wodurch die Luft flächig nach oben evakuiert wird, und/oder

iv) Verwendung einer Vakuumtasche aus Membranfolie, die bevorzugt auf die gegenüberliegende Anguss-Seite des Formkörpers platziert wird, womit die Luft von der gegenüberliegenden Seite zum Anguss evakuiert wird.

Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Nach der Infusion des Harzsystems findet unter Aufrechterhaltung des Vakuums die Reaktion des Harzsystems statt.

Gegenstand der vorliegenden Erfindung ist außerdem die Verwendung des erfindungsgemäßen Formkörpers oder des erfindungsgemäßen Paneels für Rotorblätter, in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

Nachfolgend wird die vorliegende Erfindung anhand von Beispielen verdeutlicht.

Beispiele

**Beispiel 1** (Vergleichsbeispiel; Formkörper aus reaktiv hergestellten PU-Formschaumstoffen ohne Faserverstärkung)

Es wurden die folgenden Komponenten eingesetzt:
Erste Komponente (K1):

K1-1: Mischung aus Diphenylmethandiisocyanat und Polymethylenphenylpolyisocyanat mit einem Isocyanatindex von 130 und einer Viskosität von 200 mPa • s bei 25 °C. (nach DIN 53019)

Zweite Komponente (K2):

K2-1: Saccharose/Glyzerin-basiertes Polypropylenoxid mit einer Funktionalität von 4,5, einem zahlenmittleren Molekulargewicht $M_n$ von 515 g/mol und einer Viskosität von 8000 mPa • s bei 25 °C.

K2-2: Polypropylenoxid mit einer Funktionalität von 2, einem zahlenmittleren Molekulargewicht $M_n$ von 1000 g/mol und einer Viskosität von 150 mPa • s bei 25 °C;

K2-3: Pentaerythritol-basiertes Ethylenoxid mit einer Funktionalität von 4, einem zahlenmittleren Molekulargewicht $M_n$ von 350 g/mol und einer Viskosität von 1000 mPa • s bei 25 °C;

K2-4: Phthalsäureanhydrid/Diethylenglycol-basiert mit einer Funktionalität von 2, einem zahlenmittleren Molekulargewicht $M_n$ von 350 g/mol und einer Viskosität von 2500 mPa • s bei 25 °C. (nach DIN 53019)

Katalysator: tertiäres aliphatisches Amin

Weitere Additive:

A-1: Kettenverlängerer: Propylenglycol-basiert, gewichtsmittleres Molekulargewicht $M_w$ von 134 g/mol
A-2: Vernetzer: Glyzerin-basiert, gewichtsmittleres Molekulargewicht $M_w$ von 94 g/mol
A-3: Stabilisator: Siliconhaltiger Stabilisator für Polyurethanhartschaumstoff
Weitere Komponenten: Leitungswasser

a) Herstellung der Formkörper aus reaktiv hergestelltem PU-Formschaumstoff

Die Herstellung des erfindungsgemäßen Reaktivschaumstoffs aus Polyurethan erfolgt durch das diskontinuierliche Verschäumen der reaktiven Mischungen in einer Form. Hierzu werden die zweite Komponente (K2) sowie die weiteren Additive, der Katalysator und die weiteren Komponenten vorgelegt, die erste Komponente (K1) hinzugewogen und die Mischung bei Raumtemperatur mit einem geeigneten Rührwerk bei 1800 U/min im offenen Gefäß vermischt. Die Gewichtsanteile der Komponenten sind in Tabelle 1 angegeben. Die erhaltene reaktive Mischung wird anschließend in eine geeignet temperierte Form bei 45 °C eingetragen und ausgehärtet unter Erhalt eines Polyurethanhartschaumstoffs. Anschließend wird der erhaltene Polyurethanhartschaumstoff für die weitere Verarbeitung in die benötigte Form geschnitten. Die Grundgeometrie der erhaltenen Formkörper ist durch das formgebende Werkzeug vorgegeben und in der weiteren Beschreibung näher beschrieben.

Tabelle 1:

| Komponente | Gewichtsanteile |
| --- | --- |
| K2-1 | 31,0 |
| K2-2 | 16,0 |
| K2-3 | 10,0 |
| K2-4 | 28,0 |
| A-1 | 10,0 |
| A-2 | 3,0 |
| A-3 | 2,0 |
| Katalysator | 0,75 |
| Leitungswasser | 3,0 |
| K1-1 | 100,0 |

b) Harzaufnahme der Formkörper unter Ausbildung eines Paneels.

Für die Harzaufnahme werden Platten direkt nach der Herstellung mit geschlossener Oberfläche (V1) und nach spanender Entfernung der Oberfläche durch Hobeln (V2) verglichen. Geschlitzte Platten werden entweder durch entsprechende Formteilwerkzeuge beim Formschäumverfahren (V3) oder durch spanende Bearbeitung mittels Kreissägen aus Platten (V4) hergestellt. In beiden Fällen beträgt der Schlitzabstand längs und quer jeweils 30 mm. Die Schlitze werden nur auf einer Seite der Platte mit einer Schlitzbreite von 2 mm und einer Schlitztiefe von 19 mm eingebracht (Plattendicke von 20 mm).

Zur Bestimmung der Harzaufnahme werden neben den eingesetzten Harzsystemen, dem Reaktivschaumstoff und Glasgelegen die folgende Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele, nachfolgend auch als Sandwichmaterialien bezeichnet, werden aus den Formkörpern durch Aufbringung faserverstärkter Decklagen mittels Vakuuminfusion hergestellt. An der Ober- und Unterseite der (faserverstärkten) Schaumstoffe werden je zwei Lagen Quadrax-Glasgelege (Roving: E-Glass SE1500, OCV; Textil: Saertex, isotropes Laminat [0°/-45°/90°45°] mit je 1200 g/m$^2$) aufgebracht. Für die Bestimmung der Harzaufnahme wird zwischen dem Formkörper, nachfolgend auch als Kernmaterial bezeichnet, und dem Glasgelege, im Gegensatz zur standardmäßigen Herstellung der Paneele, eine Trennfolie eingelegt. Damit ist die Harzaufnahme des reinen Formkörpers bestimmbar. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 +/- 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Reaktivschaumstoffen und glasfaserverstärkten Decklagen bestehen.

Zu Beginn werden die Formkörper nach ISO 845 (Stand Oktober 2009) vermessen, um die Rohdichte des Formkörpers zu erhalten. Nach dem Aushärten des Harzsystems werden die verarbeiteten Paneele besäumt, um überschüssige Harzansammlungen in den Randbereichen durch nicht passend anliegende Vakuumfolie zu eliminieren.

Anschließend werden die Decklagen entfernt und die enthaltenen Formkörper erneut durch ISO 845 vermessen. Aus der Differenz der Dichten ergibt sich die absolute Harzaufnahme. Durch Multiplikation mit der Dicke des Formkörpers ergibt sich die entsprechende Harzaufnahme in kg/m².

Die gezeigten Ergebnisse (siehe Tabelle 1) demonstrieren, dass die Harzaufnahme bei Formkörpern aus endkonturnah gefertigten PU-Formschaumstoffen deutlich reduziert werden kann. Folglich ergibt sich daraus eine reduzierte Dichte des Paneels.

Tabelle 1

| Beispiel | Material | Geschlossene Oberfläche | Harzaufnahme |
|---|---|---|---|
| V1 | Platte direkt nach Verarbeitung (geschlossene Oberfläche) | > 90% | < 0.1 kg/m² |
| V2 | Platte nach spanender Entfernung der Oberfläche | < 5% | 0,4 kg/m² |
| V3 | Geschlitzte Platte direkt nach Verarbeitung | > 90% | 3,2 kg/m² |
| V4 | Geschlitzte Platte durch spanende Verarbeitung | < 5% | 3,8 kg/m² |

**Beispiel 2** (Formkörper aus reaktiv hergestelltem PU-Formschaumstoff mit Faserverstärkung)

Um die Schälfestigkeit bei gleichzeitig geringer Harzaufnahme an der Oberfläche zu verbessern, werden die Versuche aus Beispiel 1 wiederholt, allerdings wird der Formkörper (Reaktivschaumstoff) zunächst teilweise mit Glasfasern (Rovings, S2-Glass, 400 tex, AGY) verstärkt.

Die Glasfasern werden in Form von Rovings unter einem Winkel $\alpha$ von 45° in vier unterschiedlichen Raumrichtungen im Winkel $\beta$ zueinander eingebracht (0°, 90°, 180°, 270°). In allen Raumrichtungen wird eine identische Anzahl von Glasfasern eingebracht. Die Glasfasern sind in einem regulären rechteckigen Muster mit gleichen Abständen (a) eingebracht. In den Versuchen wird der Abstand von a = 10 mm bis zu a = 20 mm variiert. Daraus resultieren ca. 10,000 bis 40,000 Glasfaserrovings pro Quadratmeter. An beiden Seiten werden zusätzlich ca. 10 mm der Glasfasern an der Decklage an Überstand gelassen, um die Anbindung an die später eingebrachten Glasfasermatten als Decklagen zu verbessern. Die Faser bzw. Faserrovings werden durch einen kombinierten Näh- / Häkelprozess automatisiert eingebracht. Zunächst wird mit einer Hakennadel (Durchmesser ca. 0,80 mm) vollständig von der ersten Seite zur zweiten Seite des Partikelschaums durchgestochen. Auf der zweiten Seite wird ein Roving in den Haken der Hakennadel eingehängt und anschließend von der zweiten Seite durch die Nadel zurück zur ersten Seite des Reaktivschaumstoffs gezogen. Schließlich wird der Roving an der zweiten Seite abgeschnitten und an der Nadel die gebildetete Rovingschlaufe aufgeschnitten. Die Hakennadel ist somit bereit für den nächsten Vorgang. Insgesamt wurden 40 000 verstärkende Glasfaserelemente (Rovings) / m² bei einem Abstand von 10 mm und 10 000 Glasfaserelemente / m² bei einem Raster von $a_1=a_2=20$ mm eingebracht.

Anschließend werden Paneele aus den Formkörpern durch Aufbringung faserverstärkter Decklagen mittels Vakuuminfusion hergestellt wie vorstehend für Beispiel 1 beschrieben. Im Gegensatz zu Beispiel 1 wird zwischen dem Formkörper und den Glasgelegen keine Trennfolie eingebracht.

Die Schälfestigkeit der Paneele wird mit single cantilever beam (SCB)-Proben bestimmt. Die Dicke der Formkörper beträgt 20 mm, die Schichten (S1) bestehen aus jeweils ca. 2 mm dicken, quasiisotropen glasfaserverstärkten Epoxidharzschichten. Damit ergibt sich eine Dicke des Paneels von 24 mm. Die Proben werden in einer Zwick Z050 Zugprüfmaschine mit einer Geschwindigkeit von 5 mm/min geprüft, wobei jeder Probekörper mehrfach (3 bis 4 mal) be- und entlastet wird. Das Risswachstum bzw. der Zuwachs bei jedem Belastungszyklus ($\Delta$a) wird optisch ermittelt. Aus dem Kraft-Weg-Verlauf wird die Risswachstumsenergie ($\Delta$U) ermittelt. Daraus wird die Risszähigkeit bzw. Schälfestigkeit ermittelt als

$$G_{IC} = \frac{\Delta U}{B\,\Delta a}$$

mit B als Probenbreite.

Tabelle 2

| Beispiel | Material, Winkel $\alpha$, Abstand $a_x$ x $a_y$ | Schälfestigkeit | Harzaufnahme durch Oberfläche |
|---|---|---|---|
| V5 | ungehobelter Schaum | 0,4 kJ/m² | < 0,1 kg/m² |

(fortgesetzt)

| Beispiel | Material, Winkel $\alpha$, Abstand $a_x$ x $a_y$ | Schälfestigkeit | Harzaufnahme durch Oberfläche |
|---|---|---|---|
| V6 | gehobelter Schaum | 0,4 kJ/m$^2$ | 0,4 kg/m$^2$ |
| B7 | V1, faserverstärkt mit 45° / 20 mm x 20 mm | 1,0 kJ/m$^2$ | < 0,2 kg/m$^2$ |
| B8 | V1, faserverstärkt mit 45 °/12 mm x 12 mm | 3,1 kJ/m$^2$ | < 0,2 kg/m$^2$ |
| B9 | V1, faserverstärkt mit 45 ° / 10 mm x 10 mm | 6,8 kJ/m$^2$ | < 0,2 kg/m$^2$ |
| B10 | V2, faserverstärkt mit 45°/ 20 mm x 20 mm | 1,0 kJ/m$^2$ | 0,4 kg/m$^2$ |

Wie deutlich aus Tabelle 2 zu erkennen ist, kann durch die erfindungsgemäßen einen reaktiv hergestellten PU-Formschaumstoff enthaltenden Formteile mit integrierten Fasern die Schälfestigkeit in einem Paneel deutlich gesteigert werden (B7 bis B10). Die Faserverstärkung des Reaktivschaumstoffs erlaubt damit bei nahezu identischer Harzaufnahme der Oberfläche eine deutliche Erhöhung der Schälfestigkeit. Speziell hängt die Festigkeit nur noch geringfügig von der Oberflächenrauigkeit bzw. Vorbehandlung ab und ermöglich damit eine Entkopplung der beiden Optimierungsziele Schälfestigkeit und Harzaufnahme.

**Patentansprüche**

1. Formkörper aus Reaktivschaumstoff, **dadurch gekennzeichnet, dass** mindestens eine Faser (F) sich mit einem Faserbereich (FB2) innerhalb des Formkörpers befindet und von dem Reaktivschaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei der Reaktivschaumstoff nach einem Formschäumverfahren hergestellt ist, wobei die Faser (F) in einem Winkel $\alpha$ von 10 bis 70° relativ zur Dickenrichtung (d) des Formkörpers in den Reaktivschaumstoff eingebracht ist und wobei der Formkörper erhältlich ist nach einem Verfahren umfassend die Schritte a) bis f):

   a) gegebenenfalls Aufbringen von mindestens einer Schicht (S2) auf mindestens eine Seite des Reaktivschaumstoffs,
   b) Erzeugung von einem Loch je Faser (F) im Reaktivschaumstoff und gegebenenfalls der Schicht (S2), wobei sich das Loch von einer ersten Seite zu einer zweiten Seite des Reaktivschaumstoffs und gegebenenfalls durch die Schicht (S2) erstreckt,
   c) Bereitstellung von mindestens einer Faser (F) auf der zweiten Seite des Reaktivschaumstoffs,
   d) Durchführen einer Nadel von der ersten Seite des Reaktivschaumstoffs durch das Loch zur zweiten Seite des Reaktivschaumstoffs und gegebenenfalls Durchführen der Nadel durch die Schicht (S2),
   e) Befestigen von mindestens einer Faser (F) an der Nadel auf der zweiten Seite des Reaktivschaumstoffs, und
   f) Rückführen der Nadel samt Faser (F) durch das Loch, so dass die Faser (F) sich mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers oder gegebenenfalls aus der Schicht (S2) herausragt und der Faserbereich (FB3) der Faser (F) aus einer zweiten Seite des Formkörpers herausragt, wobei die Gesamtoberfläche des Formkörpers zu mehr als 30 % geschlossen ist, bestimmt wie in der Beschreibung angegeben, wobei der Reaktivschaumstoff auf Basis eines Polyurethans, eines Polyharnstoffs oder eines Polyisocyanurats ist, wobei
   die Dichte vom Kern des Reaktivschaumstoffs zu dessen Oberfläche hin zunimmt.

2. Formkörper gemäß Anspruch 1, **dadurch gekennzeichnet, dass** das Formschäumverfahren die folgenden Schritte I) bis IV) umfasst:

   I) Bereitstellung einer reaktiven Mischung, die zumindest eine erste Komponente (K1) und zumindest eine zweite Komponente (K2) enthält, wobei die erste Komponente (K1) und die zweite Komponente (K2) miteinander reagieren können,
   II) Injektion der in Schritt I) bereitgestellten reaktiven Mischung in ein formgebendes Werkzeug,
   III) Expansion der reaktiven Mischung in dem formgebenden Werkzeug unter Erhalt eines expandierten Schaumstoffs und
   IV) Entformen des in Schritt III) erhaltenen expandierten Schaumstoffs aus dem formgebenden Werkzeug unter Erhalt des Reaktivschaumstoffs.

3. Formkörper gemäß Anspruch 2, **dadurch gekennzeichnet, dass** die in Schritt I) bereitgestellte reaktive Mischung als erste Komponente (K1) mindestens ein Polyisocyanat, und als zweite Komponente (K2) mindestens eine Verbindung mit gegenüber Isocyanaten reaktiven Gruppen, sowie als weitere Komponente mindestens ein Treibmittel enthält.

4. Formkörper gemäß einem der Ansprüche 1 bis 3, **dadurch gekennzeichnet, dass**

i) die Oberfläche von mindestens einer Seite des Formkörpers mindestens eine Vertiefung aufweist, vorzugsweise ist die Vertiefung ein Schlitz oder ein Loch, mehr bevorzugt wird mindestens eine Vertiefung auf der Oberfläche von mindestens einer Seite des Formkörpers im Anschluss an die Durchführung von Schritt IV) gemäß Anspruch 2 erzeugt, und/oder

ii) die Gesamtoberfläche des Formkörpers zu mehr als 50 %, bevorzugt zu mehr als 80 %, insbesondere zu mehr als 95 %, geschlossen ist, bestimmt wie in der Beschreibung angegeben, und/oder

iii) der Reaktivschaumstoff eine Glasübergangstemperatur von mindestens 80 °C, bevorzugt von mindestens 110 °C und insbesondere von mindestens 130 °C, aufweist, bestimmt mittels Differenzthermoanalyse.

5. Formkörper gemäß einem der Ansprüche 1 bis 4, **dadurch gekennzeichnet, dass**

i) die Faser (F) eine einzelne Faser oder ein Faserbündel, vorzugsweise ein Faserbündel, ist, und/oder

ii) die Faser (F) eine organische, anorganische, metallische, keramische Faser oder eine Kombination daraus ist, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser ist; eine polymere Faser ist vorzugsweise eine Faser aus Polyester, Polyamid, Polyaramid, Polyethylen, Polyurethan, Polyvinylchlorid, Polyimid und/oder Polyamidimid; eine Naturfaser ist vorzugsweise eine Faser aus Sisal, Hanf, Flachs, Bambus, Kokos und/oder Jute, und/oder

iii) die Faser (F) als Faserbündel eingesetzt wird mit einer Anzahl von Einzelfasern pro Bündel von mindestens 10, bevorzugt 100 bis 100 000, besonders bevorzugt 300 bis 10 000 bei Glasfasern und 1 000 bis 50 000 bei Kohlenstofffasern, und insbesondere bevorzugt 500 bis 5 000 bei Glasfasern und 2 000 bis 20 000 bei Kohlenstofffasern, und/oder

iv) der Faserbereich (FB1) und der Faserbereich (FB3) jeweils unabhängig voneinander 1 bis 45 %, vorzugsweise 2 bis 40 %, besonders bevorzugt 5 bis 30 %, und der Faserbereich (FB2) 10 bis 98 %, vorzugsweise 20 bis 96 %, besonders bevorzugt 40 bis 90 %, der Gesamtlänge einer Faser (F) ausmachen, und/oder

v) die Faser (F) in einem Winkel $\alpha$ von 30 bis 60 °, bevorzugt von 30 bis 50°, noch mehr bevorzugt von 30 bis 45°, insbesondere von 45°, relativ zur Dickenrichtung (d) des Formkörpers in den Reaktivschaumstoff eingebracht ist, und/oder

vi) im Formkörper die erste Seite des Formkörpers, aus der der Faserbereich (FB1) der Faser (F) herausragt, der zweiten Seite des Formkörpers, aus der der Faserbereich (FB3) der Faser (F) herausragt, gegenüberliegt, und/oder

vii) der Formkörper eine Vielzahl von Fasern (F), vorzugsweise von Faserbündeln, enthält und/oder mehr als 10 Fasern (F) oder Faserbündel pro m$^2$ umfasst, bevorzugt mehr als 1 000 pro m$^2$, besonders bevorzugt 4 000 bis 40 000 pro m$^2$.

6. Paneel umfassend mindestens einen Formkörper gemäß einem der Ansprüche 1 bis 5 und mindestens eine Schicht (S1).

7. Paneel gemäß Anspruch 6, **dadurch gekennzeichnet, dass** die Schicht (S1) mindestens ein Harz umfasst, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epixidharz, ein anhydridisch härtendes Epoxidharz oder ein Polyurethan aus Isocyanaten und Polyolen.

8. Paneel gemäß Anspruch 7, **dadurch gekennzeichnet, dass** die Schicht (S1) zusätzlich mindestens ein faserförmiges Material enthält, wobei

i) das faserförmige Material Fasern in Form von ein oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m$^2$ enthält, und/oder

ii) das faserförmige Material organische, anorganische, metallische oder keramische Fasern, bevorzugt polymere Fasern, Basaltfasern, Glasfasern, Kohlenstofffasern oder Naturfasern, besonders bevorzugt Glasfasern oder Kohlenstofffasern enthält.

9. Paneel gemäß einem der Ansprüche 6 bis 8, **dadurch gekennzeichnet, dass** das Paneel zwei Schichten (S1) aufweist und die beiden Schichten (S1) jeweils an einer Seite des Formkörpers angebracht sind, die der jeweils anderen Seite im Formkörper gegenüberliegt.

10. Paneel gemäß einem der Ansprüche 6 bis 9, **dadurch gekennzeichnet, dass**

i) der Faserbereich (FB1) der Faser (F) teilweise oder vollständig, vorzugsweise vollständig, mit der ersten Schicht (S1) in Kontakt ist, und/oder
ii) der Faserbereich (FB3) der Faser (F) teilweise oder vollständig, vorzugsweise vollständig, mit der zweiten Schicht (S1) in Kontakt ist, und/oder
iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, besonders bevorzugt aus porösen flächigen Fasermaterialien oder porösen polymeren Folien, insbesondere bevorzugt aus Papier, Glasfasern oder Kohlenstofffasern in Form von Vliesen, Gelegen oder Geweben.

11. Paneel gemäß einem der Ansprüche 6 bis 10, **dadurch gekennzeichnet, dass**

i) der im Paneel enthaltene Formkörper mindestens eine Seite enthält, die nicht mechanisch und/oder thermisch bearbeitet wurde, und/oder
ii) der im Paneel enthaltene Formkörper mindestens eine Schicht (S2) aufweist, die im Formschäumverfahren gemäß Anspruch 2 in Schritt II) als Trägerfolie auf den Reaktivschaumstoff aufgebracht wurde.

12. Verfahren zur Herstellung eines Formkörpers gemäß einem der Ansprüche 1 bis 5, **dadurch gekennzeichnet, dass** mindestens eine Faser (F) in den Reaktivschaumstoff teilweise eingebracht wird, wodurch sich die Faser (F) mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt.

13. Verfahren gemäß Anspruch 12, **dadurch gekennzeichnet, dass** das teilweise Einbringen von mindestens einer Faser (F) in den Reaktivschaumstoff durch Einnähen unter Verwendung einer Nadel erfolgt, vorzugsweise erfolgt das teilweise Einbringen durch die Schritte a) bis f):

a) gegebenenfalls Aufbringen von mindestens einer Schicht (S2) auf mindestens eine Seite des Reaktivschaumstoffs,
b) Erzeugung von einem Loch je Faser (F) im Reaktivschaumstoff und gegebenenfalls der Schicht (S2), wobei sich das Loch von einer ersten Seite zu einer zweiten Seite des Reaktivschaumstoffs und gegebenenfalls durch die Schicht (S2) erstreckt,
c) Bereitstellung von mindestens einer Faser (F) auf der zweiten Seite des Reaktivschaumstoffs,
d) Durchführen einer Nadel von der ersten Seite des Reaktivschaumstoffs durch das Loch zur zweiten Seite des Reaktivschaumstoffs und gegebenenfalls Durchführen der Nadel durch die Schicht (S2),
e) Befestigen von mindestens einer Faser (F) an der Nadel auf der zweiten Seite des Reaktivschaumstoffs, und
f) Rückführen der Nadel samt Faser (F) durch das Loch, so dass die Faser (F) sich mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers oder gegebenenfalls aus der Schicht (S2) herausragt und der Faserbereich (FB3) der Faser (F) aus einer zweiten Seite des Formkörpers herausragt, besonders bevorzugt werden die Schritte b) und d) gleichzeitig durchgeführt.

14. Verfahren gemäß Anspruch 12 oder 13, bei dem die Vertiefungen im Formkörper gemäß Anspruch 4 teilweise oder vollständig vor dem Einbringen von mindestens einer Faser (F) in den Reaktivschaumstoff eingebracht werden.

15. Verfahren zur Herstellung eines Paneels gemäß einem der Ansprüche 6 bis 11, **dadurch gekennzeichnet, dass** die mindestens eine Schicht (S1) als reaktives, viskoses Harz auf einen Formkörper gemäß einem der Ansprüche 1 bis 5 erzeugt, aufgebracht und ausgehärtet wird, vorzugsweise durch Flüssigimprägnierverfahren, besonders bevorzugt durch druck- bzw. vakuumunterstützte Imprägnierverfahren, insbesondere bevorzugt durch Vakuuminfusion oder druckunterstützte Injektionsverfahren, am meisten bevorzugt durch Vakuuminfusion.

16. Verwendung eines Formkörpers gemäß einem der Ansprüche 1 bis 5 oder eines Paneels gemäß einem der Ansprüche 6 bis 11 für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

**Claims**

1. A molding made of reactive foam, wherein at least one fiber (F) is with a fiber region (FB2) arranged inside the molding and surrounded by the reactive foam while a fiber region (FB1) of the fiber (F) projects from a first side of the molding and a fiber region (FB3) of the fiber (F) projects from a second side of the molding, wherein the reactive foam has been produced by a mold foaming process, wherein the fiber (F) has been introduced into the reactive foam at an angle α of 10° to 70° relative to the thickness direction (d) of the molding and wherein the molding is obtainable by a process comprising the steps a) to f):

   a) optionally applying at least one layer (S2) onto at least one side of the reactive foam,
   b) producing one hole per fiber (F) in the reactive foam and optionally the layer (S2), wherein the hole extends from a first side to a second side of the reactive foam and optionally through the layer (S2),
   c) providing at least one fiber (F) on the second side of the reactive foam,
   d) passing a needle from the first side of the reactive foam through the hole to the second side of the reactive foam and optionally passing the needle through the layer (S2),
   e) securing at least one fiber (F) to the needle on the second side of the reactive foam and
   f) returning the needle along with the fiber (F) through the hole, so that the fiber (F) is with the fiber region (FB2) arranged inside the molding and surrounded by the reactive foam while the fiber region (FB1) of the fiber (F) projects from a first side of the molding or optionally from the layer (S2) and the fiber region (FB3) of the fiber (F) projects from a second side of the molding,
   wherein the total surface area of the molding is closed to an extent of more than 30% determined as specified in the description, wherein the reactive foam is based on a polyurethane, a polyurea or a polyisocyanurate, wherein the density increases from the core of the reactive foam to the surface thereof.

2. The molding according to claim 1, wherein the mold foaming process comprises the following steps I) to IV):

   I) providing a reactive mixture which comprises at least one first component (K1) and at least one second component (K2), wherein the first component (K1) and the second component (K2) can react with one another,
   II) injecting the reactive mixture provided in step I) into a shaping mold,
   III) expanding the reactive mixture in the shaping mold to obtain an expanded foam and
   IV) demolding the expanded foam obtained in step III) from the shaping mold to obtain the reactive foam.

3. The molding according to claim 2, wherein the reactive mixture provided in step I) comprises as the first component (K1) at least one polyisocyanate and as the second component (K2) at least one compound having isocyanate-reactive groups and as a further component at least one blowing agent.

4. The molding according to any of claims 1 to 3, wherein the reactive foam comprises cells, wherein

   i) the surface of at least one side of the molding comprises at least one depression, the depression preferably being a slot or a hole, it being more preferable when at least one depression is produced on the surface of at least one side of the molding following performance of step IV) according to claim 2, and/or
   ii) the total surface area of the molding is closed to an extent of more than 50%, preferably to an extent of more than 80%, in particular to an extent of more than 95%, determined as specified in the description, and/or
   iii) the reactive foam has a glass transition temperature of at least 80°C, preferably of at least 110°C and in particular of at least 130°C determined by differential thermal analysis.

5. The molding according to any of claims 1 to 4, wherein

i) the fiber (F) is a single fiber or a fiber bundle, preferably a fiber bundle, and/or

ii) the fiber (F) is an organic, inorganic, metallic or ceramic fiber or a combination thereof, preferably a polymeric fiber, basalt fiber, glass fiber, carbon fiber or natural fiber, especially preferably a polyaramid fiber, glass fiber, basalt fiber or carbon fiber; a polymeric fiber is preferably a fiber of polyester, polyamide, polyaramid, polyethylene, polyurethane, polyvinyl chloride, polyimide and/or polyamide imide; a natural fiber is preferably a fiber of sisal, hemp, flax, bamboo, coconut and/or jute, and/or

iii) the fiber (F) is employed in the form of a fiber bundle having a number of individual fibers per bundle of at least 10, preferably 100 to 100 000, particularly preferably 300 to 10 000, in the case of glass fibers and 1000 to 50 000 in the case of carbon fibers and especially preferably 500 to 5000 in the case of glass fibers and 2000 to 20 000 in the case of carbon fibers, and/or

iv) the fiber region (FB1) and the fiber region (FB3) each independently of one another account for 1 % to 45%, preferably 2% to 40% and particularly preferably 5% to 30% and the fiber region (FB2) accounts for 10% to 98%, preferably 20% to 96%, particularly preferably 40% to 90%, of the total length of a fiber (F), and/or

v) the fiber (F) has been introduced into the reactive foam at an angle $\alpha$ of 30° to 60°, preferably of 30° to 50°, yet more preferably of 30° to 45°, in particular of 45°, relative to the thickness direction (d) of the molding, and/or

vi) in the molding the first side of the molding from which the fiber region (FB1) of the fiber (F) projects is opposite the second side of the molding from which the fiber region (FB3) of the fiber (F) projects, and/or

vii) the molding comprises a multiplicity of fibers (F), preferably of fiber bundles, and/or comprises more than 10 fibers (F) or fiber bundles per m$^2$, preferably more than 1000 per m$^2$, particularly preferably 4000 to 40 000 per m$^2$.

6. A panel comprising at least one molding according to any of claims 1 to 5 and at least one layer (S1).

7. The panel according to claim 6, wherein the layer (S1) comprises at least one resin, the resin preferably being a reactive thermosetting or thermoplastic resin, the resin more preferably being based on epoxides, acrylates, polyurethanes, polyamides, polyesters, unsaturated polyesters, vinyl esters or mixtures thereof, the resin in particular being an amine-curing epoxy resin, a latent-curing epoxy resin, an anhydride-curing epoxy resin or a polyurethane composed of isocyanates and polyols.

8. The panel according to claim 7, wherein the layer (S1) additionally comprises at least one fibrous material, wherein

i) the fibrous material comprises fibers in the form of one or more plies of chopped fibers, nonwovens, non-crimp fabrics, knits and/or wovens, preferably in the form of non-crimp fabrics or wovens, particularly preferably in the form of non-crimp fabrics or wovens having a basis weight per non-crimp fabric/ woven of 150 to 2500 g/m$^2$, and/or

ii) the fibrous material comprises organic, inorganic, metallic or ceramic fibers, preferably polymeric fibers, basalt fibers, glass fibers, carbon fibers or natural fibers, particularly preferably glass fibers or carbon fibers.

9. The panel according to any of claims 6 to 8, wherein the panel comprises two layers (S1) and the two layers (S1) are each attached at a side of the molding that is opposite the respective other side of the molding.

10. The panel according to any of claims 6 to 9, wherein

i) the fiber region (FB1) of the fiber (F) is in partial or complete contact, preferably complete contact, with the first layer (S1), and/or

ii) the fiber region (FB3) of the fiber (F) is in partial or complete contact, preferably complete contact, with the second layer (S1), and/or

iii) the panel comprises between at least one side of the molding and at least one layer (S1) at least one layer (S2), the layer (S2) preferably being composed of sheetlike fiber materials or polymeric films, particularly preferably of porous sheetlike fiber materials or porous polymeric films, especially preferably of paper, glass fibers or carbon fibers in the form of nonwovens, non-crimp fabrics or wovens.

11. The panel according to one of claims 6 to 10, wherein

i) the molding present in the panel comprises at least one side that has not been subjected to mechanical and/or thermal processing, and/or

ii) the molding present in the panel comprises at least one layer (S2) that has been applied to the reactive foam as a carrier film in the mold foaming process according to claim 2 in step II).

**12.** A process for producing a molding according to any of claims 1 to 5, wherein at least one fiber (F) is partially introduced into the reactive foam with the result that the fiber (F) is with the fiber region (FB2) arranged inside the molding and surrounded by the reactive foam while the fiber region (FB1) of the fiber (F) projects from a first side of the molding and the fiber region (FB3) of the fiber (F) projects from a second side of the molding.

**13.** The process according to claim 12, wherein the partial introduction of at least one fiber (F) into the reactive foam is effected by sewing-in using a needle,
partial introduction preferably being effected by steps a) to f):

> a) optionally applying at least one layer (S2) onto at least one side of the reactive foam,
> b) producing one hole per fiber (F) in the reactive foam and optionally the layer (S2), wherein the hole extends from a first side to a second side of the reactive foam and optionally through the layer (S2),
> c) providing at least one fiber (F) on the second side of the reactive foam,
> d) passing a needle from the first side of the reactive foam through the hole to the second side of the reactive foam and optionally passing the needle through the layer (S2),
> e) securing at least one fiber (F) to the needle on the second side of the reactive foam and
> f) returning the needle along with the fiber (F) through the hole, so that the fiber (F) is with the fiber region (FB2) arranged inside the molding and surrounded by the reactive foam while the fiber region (FB1) of the fiber (F) projects from a first side of the molding or optionally from the layer (S2) and the fiber region (FB3) of the fiber (F) projects from a second side of the molding,
> simultaneous performance of steps b) and d) being particularly preferred.

**14.** The process according to claim 12 or 13, in which the depressions in the molding according to claim 4 are introduced into the reactive foam partially or completely before the introduction of at least one fiber (F).

**15.** A process for producing a panel according to any of claims 6 to 11, wherein the at least one layer (S1) is produced, applied and cured on a molding according to any of claims 1 to 5 in the form of a reactive viscous resin, preferably by liquid impregnation methods, particularly preferably by pressure- or vacuum-assisted impregnation methods, especially preferably by vacuum infusion or pressure-assisted injection methods, most preferably by vacuum infusion.

**16.** The use of a molding according to any of claims 1 to 5 or of a panel according to any of claims 6 to 11 for rotor blades in wind turbines, in the transport sector, in the construction sector, in automobile construction, in shipbuilding, in rail vehicle construction, for container construction, for sanitary installations and/or in aerospace.

**Revendications**

**1.** Corps moulé composé de mousse réactive, **caractérisé en ce qu'**au moins une fibre (F) se trouve à l'intérieur du corps moulé avec un domaine de fibre (FB2) et est entourée par la mousse réactive, alors qu'un domaine de fibre (FB1) de la fibre (F) fait saillie d'un premier côté du corps moulé et un domaine de fibre (FB3) de la fibre (F) fait saillie d'un deuxième côté du corps moulé, la mousse réactive étant préparée par un procédé de moulage de mousse, la fibre (F) étant introduite dans la mousse réactive selon un angle $\alpha$ de 10 à 70° par rapport à la direction de l'épaisseur (d) du corps moulé et le corps moulé pouvant être obtenu par un procédé comprenant les étapes a) à f) :

> a) éventuellement, application d'au moins une couche (S2) sur au moins un côté de la mousse réactive,
> b) génération d'un trou par fibre (F) dans la mousse réactive et éventuellement de la couche (S2), le trou s'étendant d'un premier côté jusqu'à un deuxième côté de la mousse réactive et éventuellement à travers la couche (S2),
> c) fourniture d'au moins une fibre (F) sur le deuxième côté de la mousse réactive,
> d) passage d'une aiguille du premier côté de la mousse réactive à travers le trou jusqu'au deuxième côté de la mousse réactive et éventuellement passage de l'aiguille à travers la couche (S2),
> e) fixation d'au moins une fibre (F) à l'aiguille sur le deuxième côté de la mousse réactive, et
> f) renvoi de l'aiguille avec la fibre (F) par le trou, de sorte que la fibre (F) se trouve avec le domaine de fibre (FB2) à l'intérieur du corps moulé et est entourée par la mousse réactive, alors que le domaine de fibre (FB1) de la fibre (F) fait saillie d'un premier côté du corps moulé ou éventuellement de la couche (S2) et le domaine de fibre (FB3) de la fibre (F) fait saillie d'un deuxième côté du corps moulé,
> la surface totale du corps moulé étant fermée à raison de plus de 30 %, déterminé comme indiqué dans la description, la mousse réactive étant à base d'un polyuréthane, d'une polyurée ou d'un polyisocyanurate, la densité du noyau de la mousse réactive grandissant vers sa surface.

2. Corps moulé selon la revendication 1, **caractérisé en ce que** le procédé de moulage de mousse comprend les étapes suivantes I) à IV) :

> I) fourniture d'un mélange réactif qui contient au moins un premier composant (K1) et au moins un deuxième composant (K2), le premier composant (K1) et le deuxième composant (K2) pouvant réagir l'un avec l'autre,
> II) injection du mélange réactif fourni dans l'étape I) dans un outil de moulage,
> III) expansion du mélange réactif dans l'outil de moulage avec obtention d'une mousse expansée et
> IV) démoulage de la mousse expansée obtenue dans l'étape III) de l'outil de moulage avec obtention de la mousse réactive.

3. Corps moulé selon la revendication 2, **caractérisé en ce que** le mélange réactif fourni dans l'étape I) contient au moins un polyisocyanate en tant que premier composant (K1) et au moins un composé comportant des groupes réactifs envers des isocyanates en tant que deuxième composant (K2), ainsi qu'au moins un agent gonflant en tant que composant supplémentaire.

4. Corps moulé selon l'une quelconque des revendications 1 à 3, **caractérisé en ce que**

> i) la surface d'au moins un côté du corps moulé présente au moins un évidement, de préférence l'évidement est une fente ou un trou, plus préférablement au moins un évidement sur la surface d'au moins un côté du corps moulé est produit à la suite de la mise en œuvre de l'étape IV) selon la revendication 2, et/ou
> ii) la surface totale du corps moulé étant fermée à raison de plus de 50 %, préférablement à raison de plus de 80 %, en particulier à raison de plus de 95 %, déterminé comme indiqué dans la description, et/ou
> iii) la mousse réactive présente une température de transition vitreuse d'au moins 80 °C, préférablement d'au moins 110 °C et en particulier d'au moins 130 °C, déterminée au moyen d'une analyse thermique différentielle.

5. Corps moulé selon l'une quelconque des revendications 1 à 4, **caractérisé en ce que**

> i) la fibre (F) est une fibre individuelle ou un paquet de fibres, de préférence un paquet de fibres, et/ou
> ii) la fibre (F) est une fibre organique, inorganique, métallique, céramique ou une combinaison correspondante, préférablement une fibre polymérique, une fibre de basalte, une fibre de verre, une fibre de carbone ou une fibre naturelle, en particulier préférablement une fibre de polyaramide, une fibre de verre, une fibre de basalte ou une fibre de carbone ; une fibre polymérique est de préférence une fibre de polyester, de polyamide, de polyaramide, de polyéthylène, de polyuréthane, de poly(chlorure de vinyle), de polyimide et/ou de polyamidimide ; une fibre naturelle est de préférence une fibre de sisal, de chanvre, de lin, de bambou, de coco et/ou de jute ; et/ou
> iii) la fibre (F) est utilisée en tant que paquet de fibres doté d'un nombre de fibres individuelles par paquet d'au moins 10, préférablement 100 à 100 000, particulièrement préférablement 300 à 10 000 pour des fibres de verre et 1 000 à 50 000 pour des fibres de carbone, et en particulier préférablement 500 à 5 000 pour des fibres de verre et 2 000 à 20 000 pour des fibres de carbone, et/ou
> iv) le domaine de fibre (FB1) et le domaine de fibre (FB3) représentent à chaque fois indépendamment l'un de l'autre 1 à 45 %, de préférence 2 à 40 %, particulièrement préférablement 5 à 30 % de la longueur totale d'une fibre (F), et le domaine de fibre (FB2) représente 10 à 98 %, de préférence 20 à 96 %, particulièrement préférablement 40 à 90 % de la longueur totale d'une fibre (F), et/ou
> v) la fibre (F) est introduite dans la mousse réactive selon un angle $\alpha$ de 30 à 60°, préférablement de 30 à 50°, encore plus préférablement de 30 à 45°, en particulier de 45°, par rapport à la direction de l'épaisseur (d) du corps moulé, et/ou
> vi) dans le corps moulé, le premier côté du corps moulé, duquel le domaine de fibre (FB1) de la fibre (F) fait saillie, faisant face au deuxième côté du corps moulé, duquel le domaine de fibre (FB3) de la fibre (F) fait saillie, et/ou
> vii) le corps moulé contient une pluralité de fibres (F), de préférence de paquets de fibres, et/ou comprend plus de 10 fibres (F) ou paquets de fibres par m$^2$, préférablement plus de 1 000 par m$^2$, particulièrement préférablement 4 000 à 40 000 par m$^2$.

6. Panneau comprenant au moins un corps moulé selon l'une quelconque des revendications 1 à 5 et au moins une couche (S1).

**7.** Panneau selon la revendication 6, **caractérisé en ce que** la couche (S1) comprend au moins une résine, de préférence la résine est une résine réactive duroplastique ou thermoplastique, plus préférablement la résine est à base d'époxydes, d'acrylates, de polyuréthanes, de polyamides, de polyesters, de polyesters insaturés, d'esters de vinyle ou de mélanges correspondants, en particulier la résine est une résine époxy durcissant de manière aminique, une résine époxy durcissant de manière latente, une résine époxy durcissant de manière anhydre ou un polyuréthane composé d'isocyanates et de polyols.

**8.** Panneau selon la revendication 7, **caractérisé en ce que** la couche (S1) contient de plus au moins un matériau fibreux,

i) le matériau fibreux contenant des fibres sous forme d'une ou plusieurs couches de fibres coupées, de non-tissés, de nappes, de tricots et/ou de tissus, préférablement sous forme de nappes ou de tissus, particulièrement préférablement sous forme de nappes ou de tissus doté(e)s d'un poids surfacique par nappe ou tissu de 150 à 2 500 g/m$^2$, et/ou

ii) le matériau fibreux contenant des fibres organiques, inorganiques, métalliques ou céramiques, préférablement des fibres polymériques, des fibres de basalte, des fibres de verre, des fibres de carbone ou des fibres naturelles, particulièrement préférablement des fibres de verre ou des fibres de carbone.

**9.** Panneau selon l'une quelconque des revendications 6 à 8, **caractérisé en ce que** le panneau présente deux couches (S1) et les deux couches (S1) sont placées à chaque fois sur un côté du corps moulé qui fait face à l'autre côté respectif dans le corps moulé.

**10.** Panneau selon l'une quelconque des revendications 6 à 9, **caractérisé en ce que**

i) le domaine de fibre (FB1) de la fibre (F) est partiellement ou entièrement, de préférence entièrement, en contact avec la première couche (S1), et/ou

ii) le domaine de fibre (FB3) de la fibre (F) est partiellement ou entièrement, de préférence entièrement, en contact avec la deuxième couche (S1), et/ou

iii) le panneau présente au moins une couche (S2) entre au moins un côté du corps moulé et au moins une couche (S1), de préférence la couche (S2) est composée de matériaux fibreux à plat ou de feuilles polymériques, particulièrement préférablement de matériaux fibreux à plat poreux ou de feuilles polymériques poreuses, en particulier préférablement de papier, de fibres de verre ou de fibres de carbone sous forme de non-tissés, de nappes ou de tissus.

**11.** Panneau selon l'une quelconque des revendications 6 à 10, **caractérisé en ce que**

i) le corps moulé contenu dans le panneau contient au moins un côté qui n'a pas été traité mécaniquement et/ou thermiquement, et/ou

ii) le corps moulé contenu dans le panneau présente au moins une couche (S2) qui a été appliquée dans le procédé de moulage de mousse selon la revendication 2 dans l'étape II) en tant que feuille de support sur la mousse réactive.

**12.** Procédé pour la préparation d'un corps moulé selon l'une quelconque des revendications 1 à 5, **caractérisé en ce qu'**au moins une fibre (F) est introduite partiellement dans la mousse réactive, la fibre (F) avec le domaine de fibre (FB2) se trouvant ainsi à l'intérieur du corps moulé et étant entourée par la mousse réactive, alors que le domaine de fibre (FB1) de la fibre (F) fait saillie d'un premier côté du corps moulé et le domaine de fibre (FB3) de la fibre (F) fait saillie d'un deuxième côté du corps moulé.

**13.** Procédé selon la revendication 12, **caractérisé en ce que** l'introduction partielle d'au moins une fibre (F) dans la mousse réactive est réalisée par couture avec utilisation d'une aiguille, de préférence est réalisée par introduction partielle par le biais des étapes a) à f) :

a) éventuellement, application d'au moins une couche (S2) sur au moins un côté de la mousse réactive,

b) génération d'un trou par fibre (F) dans la mousse réactive et éventuellement de la couche (S2), le trou s'étendant d'un premier côté jusqu'à un deuxième côté de la mousse réactive et éventuellement à travers la couche (S2),

c) fourniture d'au moins une fibre (F) sur le deuxième côté de la mousse réactive,

d) passage d'une aiguille du premier côté de la mousse réactive à travers le trou jusqu'au deuxième côté de la mousse réactive et éventuellement passage de l'aiguille à travers la couche (S2),

e) fixation d'au moins une fibre (F) à l'aiguille sur le deuxième côté de la mousse réactive, et

f) renvoi de l'aiguille avec la fibre (F) par le trou, de sorte que la fibre (F) se trouve avec le domaine de fibre (FB2) à l'intérieur du corps moulé et est entourée par la mousse réactive, alors que le domaine de fibre (FB1) de la fibre (F) fait saillie d'un premier côté du corps moulé ou éventuellement de la couche (S2) et le domaine de fibre (FB3) de la fibre (F) fait saillie d'un deuxième côté du corps moulé,

particulièrement préférablement, les étapes b) et d) sont mises en œuvre simultanément.

14. Procédé selon la revendication 12 ou 13, dans lequel les évidements dans le corps moulé selon la revendication 4 sont introduits partiellement ou entièrement avant l'introduction d'au moins une fibre (F) dans la mousse réactive.

15. Procédé pour la préparation d'un panneau selon l'une quelconque des revendications 6 à 11, **caractérisé en ce que** l'au moins une couche (S1) est produite, appliquée et durcie en tant que résine réactive, visqueuse sur un corps moulé selon l'une quelconque des revendications 1 à 5, de préférence par un procédé d'imprégnation liquide, particulièrement préférablement par un procédé d'imprégnation assisté en pression ou assisté sous vide, en particulier préférablement par infusion sous vide ou par un procédé d'injection assisté en pression, le plus préférablement par infusion sous vide.

16. Utilisation d'un corps moulé selon l'une quelconque des revendications 1 à 5 ou d'un panneau selon l'une quelconque des revendications 6 à 11 pour des pales de rotor dans des installations éoliennes, dans le secteur des transports, dans le secteur de la construction, dans la construction automobile, dans la construction navale, dans la construction ferroviaire, pour la construction de containers, pour des installations sanitaires et/ou dans l'aéronautique et l'aérospatial.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006125561 A
- WO 2011012587 A
- WO 2012138445 A
- GB 2455044 A
- WO 2009047483 A
- US 7201625 B
- US 6767623 B

- EP 2420531 A
- EP 2480531 A
- WO 2005056653 A
- US 3030256 A
- US 6187411 B
- US 20100196652 A
- WO 12134878 A2, Younes


**In der Beschreibung aufgeführte Nicht-Patentliteratur**

- **K. ASHIDA.** *Polyurethane and related foams,* 2006
- **G. OERTEL.** Polyurethane Handbook. CRC, 1994
- **HANSER.** Szycher's Handbook of Polyurethanes. CRC, 2012
- Polyurethan. Kunststoffhandbuch. Karl Hanser Verlag, 1993, vol. 7
- **PIECHOTA ; RÖHR.** Integralschaumstoff. Carl-Hanser-Verlag, 1975
- Kunststoffhandbuch. 1993, vol. 7

- **PENCZEK et al.** *Advances in Polymer Science,* 2005, vol. 184, 1-95
- **PHAM et al.** *Ullmann's Encyclopedia of Industrial Chemistry,* 2012, vol. 13
- **FAHNLER.** *Polyamide, Kunststoff Handbuch,* 1998, vol. 3/4
- Wiley Encyclopedia of Composites. Wiley, 2012
- **PARNAS et al.** *Liquid Composite Moulding,* 2000
- **WILLIAMS et al.** *Composites Part A,* 1997, vol. 27, 517-524